# EUROPÄISCHE PATENTSCHRIFT

(11) **EP 2 178 933 B1**
(45) Veröffentlichungstag und Bekanntmachung des Hinweises auf die Patenterteilung: **08.01.2014**
(21) Anmeldenummer: 08802954.1
(22) Anmeldetag: 01.08.2008
(51) Int. Cl.: C08F 220/10, C08F 220/18, C09D 7/00, C11D 3/37, C08F 220/06

(54) **ASSOZIATIVVERDICKER-DISPERSION**
ASSOCIATIVE THICKENER DISPERSION
DISPERSION D'ÉPAISSISSANT ASSOCIATIF

(30) Priorität: 03.08.2007 EP 07113807; 11.01.2008 EP 08150202; 03.07.2008 EP 08159645
(43) Veröffentlichungstag der Anmeldung: 28.04.2010
(73) Patentinhaber: BASF SE, 67056 Ludwigshafen (DE)
(72) Erfinder: LEYRER, Reinhold, 67125 Dannstadt-Schauernheim (DE); SCHMIDT, Kati, 67063 Ludwigshafen (DE)
(86) Internationale Anmeldenummer: PCT/EP2008/060167
(87) Internationale Veröffentlichungsnummer: WO 2009/019225

(56) Entgegenhaltungen:
- EP-A1- 1 026 202
- US-A- 4 351 754

## Beschreibung

Die Erfindung betrifft eine wässrige Dispersion eines alkalilöslichen Copolymers, die sich als Assoziativverdicker eignet. Der Assoziativverdicker zeichnet sich in der gelösten, hochviskosen Form durch hohe Lichtdurchlässigkeit bzw. Transparenz aus und eignet sich z. B. als Verdickungsmittel bzw. Rheologiemodifizierer in transparenten Streichmassen, in Formulierungen für die Textilherstellung, für Textildruckpasten, im Pharma- und Kosmetikbereich, für Anstrichfarben, Pigmentslurries, für transparente Wasch- und Reinigungsmittel und in Nahrungsmitteln. Die Erfindung betrifft ferner ein Verfahren zur Herstellung des Assoziativverdickers durch Emulsionspolymerisation sowie Wasch- und Reinigungsmittel, die den Assoziativverdicker enthalten.

Assoziativverdicker sind wasserlösliche Polymere und haben tensidartige hydrophobe Bestandteile, welche in der Lage sind, sich in einem hydrophilen, insbesondere wässrigen Medium sowohl mit sich selbst als auch mit anderen hydrophoben Stoffen zu assoziieren, d.h. in Wechselwirkung zu treten. Durch das daraus resultierende assoziative Netzwerk wird das Medium verdickt oder geliert.

Die EP-A 0 013 836 offenbart Emulsionscopolymere, die (i) 20 bis 69,5 Gew.-% (Meth)acrylsäure, (ii) 0,5 bis 25 Gew.-% eines Monomers der Formel CH₂=C(R)-C(O)-O-(CH₂CH₂O)ₙ-R⁰, worin R für H oder CH₃ steht, n wenigstens 2 ist und R⁰ für C₈-C₃₀-Alkyl steht, und (iii) wenigstens 30 Gew.-% eines C₁-C₄-Alkyl(meth)acrylats enthalten. Nach Neutralisation mit Alkali dienen die Copolymere als Verdicker für Anstrichmittel, Waschmittel und dergleichen.

Die WO 99/65958 beschreibt alkalilösliche Verdicker, die das Umsetzungsprodukt einer ungesättigten Carbonsäure, eines monoethylenisch ungesättigten Monomers und eines hydrophoben, alkoxylierten Macromonomers umfassen. Das monoethylenisch ungesättigte Monomer umfasst eine Methylgruppe; vorzugsweise handelt es sich um Methylacrylat. Diese Polymere sollen bereits bei pH 4,5 bis 6,0 löslich werden und sich daher für kosmetische Erzeugnisse eignen.

Die WO 2006/016035 betrifft die Verwendung eines wasserlöslichen Acrylpolymers als Verdickungsmittel in pigmentierten wässrigen Zubereitungen. Das Acrylpolymer besteht aus einem ethylenisch ungesättigten Monomer mit Carboxylfunktion, einem ethylenisch ungesättigten nichtionischen Monomer und einem ethylenisch ungesättigten oxyalkylierten Monomer, das mit einer hydrophoben nicht-aromatischen verzweigten Kette mit 10 bis 24 Kohlenstoffatomen terminiert ist. Ein Ausführungsbeispiel betrifft ein Polymer, bei dem sich das ethylenisch ungesättigte nichtionische Monomer aus Ethylacrylat und Butylacrylat zusammensetzt (Beispiel 7).

Transparente viskose flüssige Wasch- und Reinigungsmittelzusammensetzungen erfreuen sich zunehmender Beliebtheit. Es besteht daher ein Bedürfnis nach Assoziativverdickern, die eine hohe Transparenz im gelösten, d. h. neutralisierten Zustand aufweisen und beim Einarbeiten in tensidhaltige Formulierungen keinerlei Trübung zeigen. Außerdem sind Verdicker wünschenswert, die dem verdickten Medium im Ruhezustand eine sehr hohe Viskosität, bei Einwirkung hoher Scherkräfte eine niedrige Viskosität verleihen.

Der vorliegenden Erfindung liegt daher die Aufgabe zugrunde, neue Assoziativverdicker zur Verfügung zu stellen, deren Lösungen bzw. Formulierungen mit hohem Tensidgehalt hoch transparent sind und die eine hohe Verdickungswirkung bei gleichzeitiger hoher Scherverdünnung aufweisen.

Die Aufgabe wird erfindungsgemäß durch einen Assoziativverdicker gelöst, der eine wässrige Dispersion eines Copolymers enthält, wobei das Copolymer einpolymerisierte Einheiten
a) wenigstens einer ethylenisch ungesättigten Carbonsäure,
b) wenigstens eines nichtionischen ethylenisch ungesättigten Tensidmonomers,
c) wenigstens eines C₁-C₂-Alkylmethacrylats,
d) wenigstens eines C₂-C₄-Alkylacrylats, wobei die über die Zahl der Alkylgruppen des Alkylacrylats gemittelte Alkylkettenlänge 2,1 bis 4,0, vorzugsweise 2,2 bis 3,9, besonders bevorzugt 2,3 bis 3,9 oder 2,4 bis 3,9 und insbesondere 2,5 bis 3,8, beträgt.
umfasst.

Es wurde überraschend gefunden, dass sich die Kombination wenigstens eines C₁-C₂-Alkylmethacrylats und wenigstens eines C₂-C₄-Alkylacrylats mit der angegebenen mittleren Alkylkettenlänge zur Herstellung von Dispersionen mit assoziativ verdickender Wirkung besonders eignen, wenn hohe Verdickungsleistung und hohe Transparenz in der Anwendung gewünscht sind. Bevorzugt enthält das Copolymer einpolymerisierte Einheiten von n-Butylacrylat.

Der erfindungsgemäße Assoziativverdicker zeichnet sich durch eine ausgeprägte hydrotrope Wirkung aus, d. h. er verbessert die Löslichkeit von Stoffen, die in Wasser nur schwer löslich sind. Er ist elektrolytstabil und zeigt auch in Formulierungen mit hoher Ionenstärke keine Ausflockungen bzw. Sedimentation.

Das Copolymer kann gegebenenfalls außerdem einpolymerisierte Einheiten e) eines mehrfach ethylenisch ungesättigten Monomers umfassen.

Typischerweise umfasst das Copolymer
a) 10 bis 75 Gew.-%, vorzugsweise 20 bis 50 Gew.-%, Einheiten der ethylenisch ungesättigten Carbonsäure,
b) 0,1 bis 50 Gew.-%, vorzugsweise 1 bis 10 Gew.-%, Einheiten des nichtionischen ethylenisch ungesättigten Tensidmonomers,
c) 0,5 bis 50 Gew.-%, vorzugsweise 1 bis 40 Gew.-%, Einheiten des C₁-C₂-Alkylmethacrylats,
d) 5 bis 85 Gew.-%, vorzugsweise 15 bis 70 Gew.-%, Einheiten C₂-C₄-Alkylacrylat, und
e) 0 bis 9 Gew.% Einheiten des mehrfach ethylenisch ungesättigten Monomers.

Bei der ethylenisch ungesättigten Carbonsäure handelt es sich im Allgemeinen um eine monoethylenisch ungsättigte Mono- oder Dicarbonsäure mit 3 bis 8 Kohlenstoffatomen. Geeignete ethylenisch ungesättigte Carbonsäuren sind z. B. ausgewählt unter Acrylsäure, Methacrylsäure, Itaconsäure und Maleinsäure. Davon ist Methacrylsäure besonders bevorzugt.

Nichtionische ethylenisch ungesättigte Tensidmonomere, die sich als Monomer b) eignen, sind an sich bekannt. Es handelt sich z. B. um
(a) Urethangruppen-haltige Umsetzungsprodukte eines monoethylenisch ungesättigten Isocyanats und nichtionischer Tenside,
(b) Ester ethylenisch ungesättigter Carbonsäuren und nichtionischer Tenside,
(c) Vinyl- oder Allylether nichtionischer Tenside.

Als nichtionische Tenside eignen sich vorzugsweise alkoxylierte C₆-C₃₀-Alkohole wie Fettalkoholalkoxylate oder Oxoalkoholalkoxylate. Pro Mol Alkohol verwendet man wenigstens 2, z. B. 2 bis 100, vorzugsweise 3 bis 20 Mol mindestens eines C₂-C₄-Alkylenoxids. Unterschiedliche Alkylenoxideinheiten können blockweise angeordnet oder statistisch verteilt vorliegen. Vorzugsweise setzt man als Alkylenoxid Ethylenoxid und/oder Propylenoxid ein.

Eine weitere Klasse geeigneter nichtionischer Tenside sind Alkylphenolethoxylate mit C₆-C₁₄-Alkylketten und 5 bis 30 Mol Ethylenoxideinheiten.

In bevorzugten Ausführungsformen weist das nichtionische ethylenisch ungesättigte Tensidmonomer die allgemeine Formel auf

R-O-(CH₂-CHR'-O)ₙ-CO-CR"=CH₂

worin R für C₆-C₃₀-Alkyl, vorzugsweise C₈-C₂₂-Alkyl, steht,
R' für Wasserstoff oder Methyl steht, vorzugsweise für Wasserstoff,
R" für Wasserstoff oder Methyl steht, vorzugsweise für Methyl, und
n für eine ganze Zahl von 2 bis 100, vorzugsweise 3 bis 50, steht.

Die Wiederholungseinheiten in der Klammer leiten sich von Ethylenoxid oder Propylenoxid ab. Die Bedeutung von R' ist in jeder Wiederholungseinheit unabhängig von anderen Wiederholungseinheiten. Unterschiedliche Alkylenoxideinheiten können blockweise angeordnet oder statistisch verteilt vorliegen.

Geeignete C₁-C₂-Alkylmethacrylate sind Methylmethacrylat und Ethylmethacrylat, wovon Methylmethacrylat besonders bevorzugt ist.

Geeignete C₂-C₄-Alkylacrylate sind Ethylacrylat, n-Propylacrylat und n-Butylacrylat. Die Art und Menge der C₂-C₄-Alkylacrylate werden so gewählt, dass sich eine bestimmte über die Zahl der Alkylgruppen der C₂-C₄-Alkylacrylateinheiten gemittelte Alkylkettenlänge einstellt, wie oben angegeben. Die mittlere Alkylkettenlänge wird berechnet, indem man die Kohlenstoffzahl der längsten Alkylkette des Alkylrests (d. h. beispielsweise 2 für Ethyl und 4 für n-Butyl) mit dem molaren Anteil des Alkylacrylats an der Gesamtmenge der C₂-C₄-Alkylacrylate multipliziert und die einzelnen Beiträge addiert.

Vorzugsweise umfasst das C₂-C₄-Alkylacrylat zumindest n-Butylacrylat, insbesondere ein Gemisch von n-Butylacrylat mit Ethylacrylat. Vorzugsweise enthält das Copolymer 5 bis 85 Gew.-%, bezogen auf das Gesamtgewicht des Copolymers, einpolymerisierte Einheiten von n-Butylacrylat, wobei ein Bereich von über 10 Gew.-% bis 60 Gew.-% bevorzugt und ein Bereich von 15 Gew.-% bis 45 Gew.-% besonders bevorzugt ist.

Verwendbare mehrfach ethylenisch ungesättigte Monomere sind z. B. Ethylenglycol-di(meth)acrylat, 1,6-Hexandioldi(meth)acrylat, Divinylbenzol und dergleichen.

Das Copolymer ist vorzugsweise ein einstufiges Copolymer. Der Ausdruck "einstufiges Copolymer" bedeutet, dass es im Wesentlichen eine einheitliche Zusammensetzung über das einzelne Polymerpartikel aufweist. D. h. es weist keine abgrenzbaren Domänen, z. B. Schalen, mit unterschiedlicher Zusammensetzung auf, wie sie durch Stufenpolymeristion unterschiedlicher Monomerengemische erhalten werden.

Die wässrige Dispersion enthält in der Regel einen anionischen und/oder einen nichtionischen Emulgator.

Typische Emulgatoren sind anionische Emulgatoren wie z. B. Natriumlaurylsulfat, Natriumtridecylethersulfate, Dioctylsulfosuccinat Natriumsalz und Natriumsalze von Alkylarylpolyethersulfonaten; und nichtionische Emulgatoren wie z. B. Alkylarylpolyether-alkohole und Ethylenoxid-Propylenoxid-Copolymere.

Bevorzugte Emulgatoren weisen die allgemeine Formel auf

R-O-(CH₂-CHR'-O)ₙ-X

worin R für C₆-C₃₀-Alkyl steht,
R' für Wasserstoff oder Methyl steht,
X für Wasserstoff oder SO₃M steht,
M für Wasserstoff oder ein Alkalimetall steht, und
n für eine ganze Zahl von 2 bis 100 steht.

Das Copolymer ist auf verschiedene Weisen herstellbar, vorzugsweise durch Emulsionspolymerisation.

Zur Polymerisation wird ein geeigneter Polymerisationsinitiator verwendet. Thermisch aktivierbare radikalische Polymerisationsinitiatoren sind bevorzugt.

Geeignete thermisch aktivierbare radikalische Initiatoren sind vor allem solche des Peroxy- und Azotyps. Hierzu zählen unter anderem Wasserstoffperoxid, Peressigsäure, t-Butylhydroperoxid, Di-t-butylperoxid, Dibenzoylperoxid, Benzoylhydroperoxid, 2,4-Dichlorbenzoylperoxid, 2,5-Dimethyl-2,5-bis(hydroperoxy)hexan, Perbenzoesäure, t-Butylperoxypivalat, t-Butylperacetat, Dilauroylperoxid, Dicapryloylperoxid, Distearoylperoxid, Dibenzoylperoxid, Diisopropylperoxydicarbonat, Didecylperoxydicarbonat, Dieicosylperoxydicarbonat, Di-t-butylperbenzoat, Azobisisobutyronitril, 2,2'-Azobis-2,4-dimethylvaleronitril, Ammoniumpersulfat, Kaliumpersulfat, Natriumpersulfat und Natriumperphosphat.

Die Persulfate (Peroxodisulfate), insbesondere Natriumpersulfat, sind am meisten bevorzugt.

Bei der Durchführung der Emulsionspolymerisation wird der Initiator in ausreichender Menge verwendet, um die Polymerisationsreaktion zu initiieren. Der Initiator wird üblicherweise in einer Menge von etwa 0,01 bis 3 Gew.-%, bezogen auf das Gesamtgewicht der eingesetzten Monomere, verwendet. Die Initiatormenge beträgt vorzugsweise etwa 0,05 bis 2 Gew.-% und insbesondere 0,1 bis 1 Gew.-%, bezogen auf das Gesamtgewicht der eingesetzten Monomere.

Die Emulsionspolymerisation erfolgt üblicherweise bei 35 bis 100 °C. Sie kann sowohl als batch-Prozess als auch in Form eines Zulaufverfahrens durchgeführt werden. Bevorzugt ist die Zulauffahrweise, bei dem man zumindest einen Teil des Polymerisationsinitiators und gegebenenfalls einen Teil der Monomeren vorlegt, auf Polymerisationstemperatur erhitzt und anschließend den Rest des Polymerisationsansatzes, üblicherweise über mehrere getrennte Zuläufe, von denen einer oder mehrere die Monomeren in reiner oder emulgierter Form enthalten, kontinuierlich oder stufenweise unter Aufrechterhaltung der Polymerisation zuführt. Vorzugsweise erfolgt der Monomerzulauf in Form einer Monomeremulsion. Parallel zum Monomerzulauf kann weiterer Polymerisationsinitiator zudosiert werden.

In bevorzugten Ausführungsformen legt man die gesamte Initatormenge vor, d. h. parallel zum Monomerzulauf erfolgt keine weitere Initiatordosierung. Es wurde überraschend gefunden, dass diese Vorgehensweise zu besonders hoher Transparenz des Assoziativverdickers führt.

In einer bevorzugten Ausführungsform legt man daher den thermisch aktivierbaren radikalischen Polymerisationsinitiator vollständig vor und lässt das Monomerengemisch, vorzugsweise in Form einer Monomeremulsion, zulaufen. Bevor man den Zulauf des Monomerengemisches startet, bringt man die Vorlage auf die Aktivierungstemperatur des thermisch aktivierbaren radikalischen Polymerisationsinitiators oder eine höhere Temperatur. Als Aktivierungstemperatur wird die Temperatur angesehen, bei der nach einer Stunde mindestens die Hälfte des Initiators zerfallen ist.

Gemäß einer anderen bevorzugten Herstellungsart erhält man das Copolymer durch Polymerisation eines Monomerengemisches in Gegenwart eines Redoxinitiatorsystems. Ein Redoxinitiatorsystem umfasst wenigstens eine Oxidationsmittelkomponente und wenigstens eine Reduktionsmittelkomponente, wobei im Reaktionsmedium vorzugsweise zusätzlich Schwermetallionen als Katalysator vorhanden sind, beispielsweise Cer-, Mangan- oder Eisen(II)-salze.

Geeignete Oxidationsmittelkomponenten sind beispielsweise Peroxide und/oder Hydroperoxide wie Wasserstoffperoxid, tert.-Butylhydroperoxid, Cumolhydroperoxid, Pinanhydroperoxid, Düsopropylphenylhydroperoxid, Dicyclohexylpercarbonat, Dibenzoylperoxid, Dilauroylperoxid und Diacetylperoxid. Wasserstoffperoxid und tert.-Butylhydroperoxid sind bevorzugt.

Geeignete Reduktionsmittelkomponenten sind Alkalimetallsulfite, Alkalimetalldithionite, Alkalimetallhyposulfite, Natriumhydrogensulfit, Rongalit C (Natriumformaldehydsulfoxylat), Mono- und Dihydroxyaceton, Zucker (z.B. Glucose oder Dextrose), Ascorbinsäure und ihre Salze, Acetonbisulfit-Addukt und/oder ein Alkalimetallsalz der Hydroxymethansulfinsäure. Ascorbinsäure ist bevorzugt.

Als Reduktionsmittelkomponente bzw. Katalysator eignen sich auch Eisen(II)-salze wie z.B. Eisen(II)-sulfat, Zinn(II)-salze wie z.B. Zinn(II)-chlorid, Titan(III)-salze wie Titan(III)-sulfat.

Die Einsatzmengen an Oxidationsmittel betragen 0,001 bis 5,0 Gew.-%, vorzugsweise von 0,005 bis 1,0 Gew.-% und besonders bevorzugt von 0,01 bis 0,5 Gew.-%, bezogen auf das Gesamtgewicht der eingesetzten Monomere. Reduktionsmittel werden in Mengen von 0,001 bis 2,0 Gew.-%, vorzugsweise von 0,005 bis 1,0 Gew.-% und besonders bevorzugt von 0,01 bis 0,5 Gew.-% eingesetzt, bezogen auf das Gesamtgewicht der eingesetzten Monomere.

Ein besonders bevorzugtes Redoxinitiatorsystem ist das System Natriumperoxodisulfat/Ascorbinsäure, z. B. 0,001 bis 5,0 Gew.-% Natriumperoxodisulfat und 0,001 bis 2,0 Gew.-% Ascorbinsäure, insbesondere 0,005 bis 1,0 Gew.-% Natriumperoxodisulfat und 0,005 bis 1,0 Gew.-% Ascorbinsäure, besonders bevorzugt 0,01 bis 0,5 Gew.-% Natriumperoxodisulfat und 0,01 bis 0,5 Gew.-% Ascorbinsäure.

Ein weiteres besonders Redoxinitiatorsystem ist das System t-Butylhydroperoxid/Wasserstoffperoxid/Ascorbinsäure, z. B. 0,001 bis 5,0 Gew.-% t-Butylhydroperoxid, 0,001 bis 5,0 Gew.-% Wasserstoffperoxid und 0,001 bis 2,0 Gew.-% Ascorbinsäure, insbesondere 0,005 bis 1,0 Gew.-% t-Butylhydroperoxid, 0,005 bis 1,0 Gew.-% Wasserstoffperoxid und 0,005 bis 1,0 Gew.-% Ascorbinsäure, besonders bevorzugt 0,01 bis 0,5 Gew.-% t-Butylhydroperoxid, 0,01 bis 0,5 Gew.-% Wasserstoffperoxid und 0,01 bis 0,5 Gew.-% Ascorbinsäure.

In einer bevorzugten Ausführungsform lässt man in eine wässrige Vorlage, die auf Polymerisationstemperatur erhitzt ist, ein Monomerengemisch zulaufen, vorzugsweise in Form einer Monomeremulsion. Parallel zum Monomerzulauf lässt man zumindest zeitweise eine Oxidationsmittelkomponente und eine Reduktionsmittelkomponente des Redoxinitiatorsystems zulaufen. Vorzugsweise legt man einen Teil der Oxidationsmittelkomponente des Redoxinitiatorsystems vor. Gegebenenfalls kann man einen Teil der Monomeren vorlegen.

Die Copolymerdispersion kann einer chemischen Desodorierung unterzogen werden. Bei der chemischen Desodorierung wird nach Ende der eigentlichen Emulsionspolymerisation weiterer Initiator, z.B. ein Redoxinitiator zugesetzt. Zur chemischen Desodorierung geeignete Redoxinitiatoren umfassen als oxidierende Komponente beispielsweise wenigstens ein organisches Peroxid und/oder Hydroperoxid wie Wasserstoffperoxid, tert.-Butylperoxid, Cumolhydroperoxid, Pinanhydroperoxid, Diisopropylphenylhydroperoxid, Dibenzoylperoxid, Dilauroylperoxid und Diacetylperoxid und als reduzierend wirkende Komponente beispielsweise Eisen(II)-salze, Alkalimetallsulfite, Ascorbinsäure, Acetonbisulfit-Addukt und/oder ein Alkalimetallsalz der Hydroxymethansulfinsäure.

Die Copolymerdispersion weist in der Regel einen Feststoffgehalt von 25 bis 40 Gew.-%, insbesondere etwa 30 Gew.-%, auf.

In unneutralisierter Form weist die Copolymerdispersion eine relativ niedrige Viskosität auf. Sie ist daher leicht handhabbar und kann problemlos dosiert oder umgepumpt werden. Durch Neutralisation, z. B. auf einen pH von mehr als 5,5, vorzugsweise mehr als 6, insbesondere 8 bis 10, wird das Copolymer löslich und die Viskosität des wässrigen Mediums steigt stark an. Geeignete Neutralisierungsmittel sind z. B. Natriumhydroxid, Kaliumhydroxid, Ammoniumhydroxid, Amine, wie Triethylamin, Triethanolamin, Monoethanolamin, und andere alkalische Materialien.

Die erfindungsgemäßen Assoziativverdicker eignen sich als Verdickungsmittel bzw. Rheologiemodifizierer in Streichmassen, Formulierungen für die Textilherstellung, für Textildruckpasten, im Pharma- und Kosmetikbereich, für Anstrichfarben, Pigmentslurries, für Wasch- und Reinigungsmittel und in Nahrungsmitteln. Besonders bevorzugt ist die Verwendung in flüssigen Wasch- und Reinigungsmitteln.

Die Erfindung betrifft in einem weiteren Aspekt eine flüssige Wasch- oder Reinigungsmittelzusammensetzung, insbesondere eine transparente flüssige Wasch- oder Reinigungsmittelzusammensetzung, die einen erfindungsgemäßen Assoziativverdicker in vollständig oder teilweise neutralisierter Form enthält.

Neben dem Assoziativverdicker enthalten die flüssigen Wasch- oder Reinigungsmittel Tensid(e), wobei anionische, nichtionische, kationische und/oder amphotere Tenside eingesetzt werden können. Bevorzugt sind aus anwendungstechnischer Sicht Mischungen aus anionischen und nichtionischen Tensiden. Der Gesamttensidgehalt des flüssigen Wasch- oder Reinigungsmittel beträgt vorzugsweise 5 bis 60 Gew.-% und besonders bevorzugt 15 bis 40 Gew.-%, bezogen auf das gesamte flüssige Wasch- oder Reinigungsmittel.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO, 4 EO oder 7 EO, C₉-C₁₁-Alkohol mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO- und PO-Einheiten nicht blockweise, sondern statistisch verteilt sind. Solche Produkte sind durch gleichzeitige Einwirkung von Ethylen- und Propylenoxid auf Fettalkohole erhältlich.

Außerdem können als weitere nichtionische Tenside auch Alkylglykoside der allgemeinen Formel (1)

R¹O(G)ₓ (1)

eingesetzt werden, worin R¹ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP 58/217598 beschrieben sind oder die vorzugsweise nach dem in der internationalen Patentanmeldung WO-A-90/13533 beschriebenen Verfahren hergestellt werden.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (2), 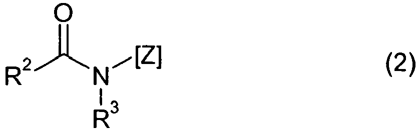 worin R²C(=O) für einen aliphatischen Acylrest mit 6 bis 22 Kohlenstoffatomen, R³ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (3) 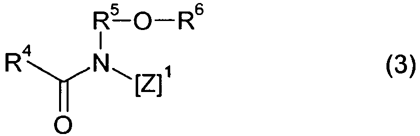 worin R⁴ für einen linearen oder verzweigten Alkyl- oder Alkenylrest mit 7 bis 12 Kohlenstoffatomen, R⁵ für einen linearen, verzweigten oder cyclischen Alkylenrest mit 2 bis 8 Kohlenstoffatomen oder einen Arylenrest mit 6 bis 8 Kohlenstoffatomen und R⁶ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z]¹ für einen linearen Polyhydroxyalkylrest steht, dessen Alkylkette mit mindestens zwei Hydroxylgruppen substituiert ist, oder alkoxylierte, vorzugsweise ethoxylierte oder propoxylierte Derivate dieses Restes. [Z]¹ wird vorzugsweise durch reduktive Aminierung eines Zuckers erhalten, beispielsweise Glucose, Fructose, Maltose, Lactose, Galactose, Mannose oder Xylose. Die N-Alkoxy- oder N-Aryloxy-substituierten Verbindungen können dann beispielweise gemäß WO-A-95/07331 durch Umsetzung mit Fettsäuremethylestern in Gegenwart eines Alkoxids als Katalysator in die gewünschten Polyhydroxyfettsäureamide überführt werden.

Der Gehalt an nichtionischen Tensiden beträgt in den flüssigen Wasch- oder Reinigungsmitteln bevorzugt 5 bis 30 Gew.-%, vorzugsweise 7 bis 20 Gew.-% und insbesondere 9 bis 15 Gew.- %, jeweils bezogen auf das gesamte Mittel.

Als anionische Tenside werden beispielsweise solche vom Typ der Sulfonate und Sulfate eingesetzt. Als Tenside vom Sulfonat-Typ kommen dabei vorzugsweise C₉-C₁₃-Alkylbenzolsulfonate, Olefinsulfonate, d.h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse bzw. Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate, welche beispielsweise gemäß den US-Patentschriften 3,234,258 oder 5,075,041 hergestellt werden und als Handelsprodukte der Shell Oil Company unter dem Namen DAN® erhalten werden können, sind geeignete Aniontenside.

Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (EO) oder C₁₂-C₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈-C₁₈- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Insbesondere bevorzugte anionische Tenside sind Seifen. Geeignet sind gesättigte und ungesättigte Fettsäureseifen, wie die Salze der Laurinsäure, Myristinsäure, Palmitinsäure, Stearinsäure, (hydrierten) Erucasäure und Behensäure sowie insbesondere aus natürlichen Fettsäuren, zum Beispiel Kokos-, Palmkern-, Olivenöl- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Der Gehalt bevorzugter flüssiger Wasch- oder Reinigungsmittel an anionischen Tensiden beträgt 2 bis 30 Gew.-%, vorzugsweise 4 bis 25 Gew.-% und insbesondere 5 bis 22 Gew.-%, jeweils bezogen auf das gesamte Mittel. Es ist besonders bevorzugt, dass die Menge an Fettsäureseife mindestens 2 Gew.-% und besonders bevorzugt mindestens 4 Gew.-% und insbesondere bevorzugt mindestens 6 Gew.-% beträgt.

Die Viskosität der flüssigen Wasch- oder Reinigungsmittel kann mit üblichen Standardmethoden (beispielsweise Brookfield-Viskosimeter LVT-II bei 20 U/min und 20 °C, Spindel 3) gemessen werden und liegt vorzugsweise im Bereich von 100 bis 5000 mPas. Bevorzugte Mittel haben Viskositäten von 300 bis 4000 mPas, wobei Werte zwischen 1000 und 3000 mPas besonders bevorzugt sind.

Zusätzlich zu dem Assoziativverdicker und zu dem/den Tensid(en) können die flüssigen Wasch oder Reinigungsmittel weitere Inhaltsstoffe enthalten, die die anwendungstechnischen und/oder ästhetischen Eigenschaften des flüssigen Wasch- oder Reinigungsmittels weiter verbessern. In der Regel enthalten bevorzugte Mittel zusätzlich zu dem Assoziativverdicker und zu Tensid(en) einen oder mehrere Stoffe aus der Gruppe der Gerüststoffe, Bleichmittel, Bleichaktivatoren, Enzyme, Elektrolyte, nichtwässrigen Lösungsmittel, pH-Stellmittel, Duftstoffe, Parfümträger, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel sowie UV-Absorber.

Als Gerüststoffe bzw. Builder, die in den flüssigen Wasch- oder Reinigungsmitteln enthalten sein können, sind insbesondere Silikate, Aluminiumsilikate (insbesondere Zeolithe), Carbonate, Salze organischer Di- und Polycarbonsäuren sowie Mischungen dieser Stoffe zu nennen.

Geeignete niedermolekulare Polycarboxylate als organische Builder sind beispielsweise:
C₄-C₂₀-Di-, -Tri- und -Tetracarbonsäuren wie z.B. Bernsteinsäure, Propantricarbonsäure, Butantetracarbonsäure, Cyclopentantetracarbonsäure und Alkyl- und Alkylenbernsteinsäuren mit C₂-C₁₆-Alkyl- bzw. -Alkylen-Resten;
C₄-C₂₀-Hydroxycarbonsäuren wie z.B. Äpfelsäure, Weinsäure, Gluconsäure, Glutarsäure, Citronensäure, Lactobionsäure und Saccharosemono-, -di- und -tricarbonsäure;
Aminopolycarboxylate wie z.B. Nitrilotriessigsäure, Methylglycindiessigsäure, Alanindiessigsäure, Ethylendiamintetraessigsäure und Serindiessigsäure;
Salze von Phosphonsäuren wie z.B. Hydroxyethandiphosphonsäure, Ethylendiamintetra(methylenphoshponat) und Diethylentriaminpenta(methylenphosphat).

Geeignete oligomere oder polymere Polycarboxylate als organische Builder sind beispielsweise:
Oligomaleinsäuren, wie sie beispielsweise in EP-A 0 451 508 und EP-A 0 396 303 beschrieben sind;
Co- und Terpolymere ungesättigter C₄-C₈-Dicarbonsäuren, wobei als Comonomere monoethylenisch ungesättigte Monomere
   aus der Gruppe (i) in Mengen von bis zu 95 Gew.-%
   aus der Gruppe (ii) in Mengen von bis 60 Gew.-%
   aus der Gruppe (iii) in Mengen von bis zu 20 Gew.-%
einpolymerisiert enthalten sein können.

Als ungesättigte C₄-C₈-Dicarbonsäuren sind hierbei beispielsweise Maleinsäure, Fumarsäure, Itaconsäure und Citraconsäure (Methylmaleinsäure) geeignet. Bevorzugt ist Maleinsäure.

Die Gruppe (i) umfasst monoethylenisch ungesättigte C₃-C₈-Monocarbonsäuren wie z.B. Acrylsäure, Methacrylsäure, Crotonsäure und Vinylessigsäure. Bevorzugt werden aus der Gruppe (i) Acrylsäure und Methacrylsäure eingesetzt.

Die Gruppe (ii) umfasst monoethylenisch ungesättigte C₂-C₂₂-Olefine, Vinylalkylether mit C₁-C₈-Alkylgruppen, Styrol, Vinylester von C₁-C₈-Carbonsäure, (Meth)acrylamid und Vinylpyrrolidon. Bevorzugt werden aus der Gruppe (ii) C₂-C₆-Olefine, Vinylalkylether mit C₁-C₄-Alkylgruppen, Vinylacetat und Vinylpropionat eingesetzt.

Die Gruppe (iii) umfasst (Meth)acrylester von C₁-C₈-Alkoholen, (Meth)acrylnitril, (Meth)acrylamide, (Meth)acrylamide von C₁-C₈-Aminen, N-Vinylformamid und Vinylimidazol.

Falls die Polymeren der Gruppe (ii) Vinylester einpolymerisiert enthalten, können dieses auch teilweise oder vollständig zu Vinylalkohol-Struktureinheiten hydrolysiert vorliegen. Geeignete Co- und Terpolymere sind beispielsweise aus US 3,887,806 sowie SE-A 43 13 909 bekannt.

Als Copolymere von Dicarbonsäuren eignen sich als organische Builder vorzugsweise:
Copolymere von Maleinsäure und Acrylsäure im Gewichtsverhältnis 10:90 bis 95:5, insbesondere bevorzugt solche im Gewichtsverhältnis 30:70 bis 90:10 mit Molmassen von 10000 bis 150000;
Terpolymere aus Maleinsäure, Acrylsäure und einem Vinylester einer C₁-C₃-Carbonsäure im Gewichtsverhältnis 10 (Maleinsäure) : 90 (Acrylsäure + Vinylester) bis 95 (Maleinsäure) : 10 (Acrylsäure + Vinylester), wobei das Gew.-Verhältnis von Acrylsäure zu Vinylester im Bereich von 20:80 bis 80:20 variieren kann, und besonders bevorzugt
Terpolymere aus Maleinsäure, Acrylsäure und Vinylacetat oder Vinylpropionat im Gewichtsverhältnis 20 (Maleinsäure) : 80 (Acrylsäure + Vinylester) bis 90 (Maleinsäure) : 10 (Acrylsäure + Vinylester), wobei das Gew.-Verhältnis von Acrylsäure zum Vinylester im Bereich von 30:70 bis 70:30 variieren kann;
Copolymere von Maleinsäure mit C₂-C₈-Olefinen im Molverhältnis 40:60 bis 80:20, wobei Copolymere von Maleinsäure mit Ethylen, Propylen oder Isobutan im Molverhältnis 50:50 besonders bevorzugt sind.
Pfropfpolymere ungesättigter Carbonsäuren auf niedermolekulare Kohlenhydrate oder hydrierte Kohlenhydrate, vgl. US 5,227,446, DE-A 44 15 623, DE-A 43 13 909, sind ebenfalls als organische Builder geeignet.

Geeignete ungesättigte Carbonsäuren sind hierbei beispielsweise Maleinsäure, Fumarsäure, Itaconsäure, Citraconsäure, Acrylsäure, Methacrylsäure, Crotonsäure und Vinylessigsäure sowie Mischungen aus Acrylsäure und Maleinsäure, die in Mengen von 40 bis 95 Gew.-%, bezogen auf die zu pfropfende Komponente, aufgepfropft werden.

Zur Modifizierung können zusätzlich bis zu 30 Gew.-%, bezogen auf die zu pfropfende Komponente, weitere monoethylenisch ungesättigte Monomere einpolymerisiert vorliegen. Geeignete modifizierende Monomere sind die oben genannten Monomere der Gruppen (ii) und (iii).

Als Pfropfgrundlage sind abgebaute Polysaccharide wie z.B. saure oder enzymatisch abgebaute Stärken, Inuline oder Zellulose, reduzierte (hydrierte oder hydrierend aminierte) abgebaute Polysaccharide wie z.B. Mannit, Sorbit, Aminosorbit und Glucamin geeignet sowie Polyalkylenglycole mit Molmassen bis zu Mw = 5000 wie z.B. Polyethylenglycole, Ethylenoxid/Propylenoxid- bzw. Ethylenoxid/Butylenoxid-Blockcopolymere, statistische Ethylenoxid/Popylenoxid- beziehungsweise Ethylenoxid/Butylenoxid-Copolymere, alkoxylierte ein- oder mehrbasische C₁-C₂₂-Alkohole, vgl. US 4,746,456.

Bevorzugt werden aus dieser Gruppe gepfropfte abgebaute beziehungsweise abgebaute reduzierte Stärken und gepfropfte Polyethylenoxide eingesetzt, wobei 20 bis 80 Gew.-% Monomere bezogen auf die Pfropfkomponente bei der Pfropfpolymerisation eingesetzt werden. Zur Pfropfung wird vorzugsweise eine Mischung von Maleinsäure und Acrylsäure im Gew.-Verhältnis von 90:10 bis 10:90 eingesetzt.

Polyglyoxylsäuren als organische Builder sind beispielsweise beschrieben in EP-B 0 001 004, US 5,399,286, DE-A 41 06 355 und EP-A 0 656 914. Die Endgruppen der Polyglyoxylsäuren können unterschiedliche Strukturen aufweisen.

Polyamidocarbonsäuren und modifizierte Polyamidocarbonsäuren als organische Builder sind beispielsweise bekannt aus EP-A 0 454 126, EP-B 0 511 037, WO-A 94/01486 und EP-A 0 581 452.

Vorzugsweise verwendet man als organische Builder auch Polyasparaginsäure oder Cokondensate der Asparaginsäure mit weiteren Aminosäuren, C₄-C₂₅-Mono- oder - Dicarbonsäuren und/oder C₄-C₂₅-Mono- oder -Diaminen. Besonders bevorzugt werden in phosphorhaltigen Säuren hergestellte, mit C₆-C₂₂-Mono- oder -Dicarbonsäuren beziehungsweise mit C₆-C₂₂-Mono- oder -Diaminen modifizierte Polyasparaginsäuren eingesetzt.

Kondensationsprodukte der Citronensäure mit Hydroxycarbonsäuren oder Polyhydroxyverbindungen als organische Builder sind z.B. bekannt aus WO-A 93/22362 und WO-A 92/16493. Solche Carboxylgruppen enthaltende Kondensate haben üblicherweise Molmassen bei zu 10000, vorzugsweise bis zu 5000.

Unter den als Bleichmittel dienenden, in Wasser H₂O₂ liefernden Verbindungen haben das Natriumperborattetrahydrat und das Natriumperboratmonohydrat besondere Bedeutung. Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure.

Um beim Waschen bei Temperaturen von 60 °C und darunter eine verbesserte Bleichwirkung zu erreichen, können Bleichaktivatoren in die Wasch- oder Reinigungsmittel eingearbeitet werden. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1 ,5-Diacetyl-2,4-dioxohexahydro-1 ,3,5-triazin (DADHT), acylierte Glykolurile, insbesondere Tetraacetylglykoluril (TAGU)1 N-Acylimide, insbesondere N-Nonanoylsuccinimid (NOSI), acylierte Phenolsulfonate, insbesondere n-Nonanoyloder Isononanoyloxybenzolsulfonat (nbzw. iso-NOBS), Carbonsäureanhydride, insbsondere Phthalsäureanhydrid, acylierte mehrwertige Alkohole, insbesondere Triacetin, Ethylenglykoldiacetat und 2,5-Di-acetoxy-2,5- dihydrofuran.

Zusätzlich zu den konventionellen Bleichaktivatoren oder an deren Stelle können auch sogenannte Bleichkatalysatoren in die flüssigen Wasch- oder Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-, Ru - oder Mo-Salenkomplexe oder -carbonylkomplexe. Auch Mn-, Fe-, Co-, Ru-, Mo-, Ti-, V- und Cu-Komplexe mit stickstoffhaltigen Tripod-Liganden sowie Co-, Fe-, Cu-und Ru-Aminkomplexe sind als Bleichkatalysatoren verwendbar.

Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxireduktasen eingesetzt werden. Besonders gut geeignet sind aus Bakterienstämmen oder Pilzen wie Bacillus subtilis, Bacillus licheniformis, Streptomyceus griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/oder Lipase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich verschiedene Cellulase-Typen durch ihre CMCaseund Avicelase-Aktivitäten unterscheiden, können durch gezielte Mischungen der Cellulasen die gewünschten Aktivitäten eingestellt werden.

Die Enzyme können an Trägerstoffe adsorbiert sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,12 bis etwa 2,5 Gew.-% betragen.

Als Elektrolyte aus der Gruppe der anorganischen Salze kann eine breite Anzahl der verschiedensten Salze eingesetzt werden. Bevorzugte Kationen sind die Alkali- und Erdalkalimetalle, bevorzugte Anionen sind die Halogenide und Sulfate. Aus herstellungstechnischer Sicht ist der Einsatz von NaCl oder MgCl₂ in den Mitteln bevorzugt. Der Anteil an Elektrolyten in den Mitteln beträgt üblicherweise 0,5 bis 5 Gew.-%.

Nichtwässrige Lösungsmittel, die in den flüssigen Wasch- oder Reinigungsmitteln eingesetzt werden können, stammen beispielsweise aus der Gruppe ein- oder mehrwertigen Alkohole, Alkanolamine oder Glykolether, sofern sie im angegebenen Konzentrationsbereich mit Wasser mischbar sind. Vorzugsweise werden die Lösungsmittel ausgewählt aus Ethanol, n- oder i-Propanol, Butanolen, Glykol, Propan- oder Butandiol, Glycerin, Diglykol, Propyl- oder Butyldiglykol, Hexylenglycol, Ethylenglykolmethylether, Ethylenglykolethylether, Ethylenglykolpropylether, Ethylenglykolmono-n-butylether, Diethylenglykol-methylether, Diethylenglykolethylether, Propylenglykolmethyl-, -ethyl- oder -propylether, Dipropylenglykolmonomethyl- oder - ethylether, Di-isopropylenglykolmonomethyl- oder -ethylether, Methoxy-, Ethoxy- oder Butoxytriglykol, i-Butoxy-ethoxy-2-propanol, 3-Methyl-3-methoxybutanol, Propylen-glykol-t-butylether sowie Mischungen dieser Lösungsmittel. Nichtwässrige Lösungsmittel können in den flüssigen Wasch- oder Reinigungsmitteln in Mengen zwischen 0,5 und 15 Gew.-%, bevorzugt aber unter 12 Gew.-% und insbesondere unterhalb von 9 Gew.-% eingesetzt werden.

Um den pH-Wert der flüssigen Wasch- oder Reinigungsmittel in den gewünschten Bereich zu bringen, kann der Einsatz von pH-Stellmitteln angezeigt sein. Einsetzbar sind hier sämtliche bekannten Säuren bzw. Laugen, sofern sich ihr Einsatz nicht aus anwendungstechnischen oder ökologischen Gründen bzw. aus Gründen des Verbraucherschutzes verbietet. Üblicherweise überschreitet die Menge dieser Stellmittel 7 Gew.-% der Gesamtformulierung nicht.

Um den ästhetischen Eindruck der flüssigen Wasch- oder Reinigungsmittel zu verbessern, können sie mit geeigneten Farbstoffen eingefärbt werden. Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Als Schauminhibitoren, die in den flüssigen Wasch- oder Reinigungsmitteln eingesetzt werden können, kommen beispielsweise Seifen, Paraffine oder Silikonöle in Betracht, die gegebenenfalls auf Trägermaterialien aufgebracht sein können.

Geeignete Antiredepositionsmittel, die auch als "soil repellents" bezeichnet werden, sind beispielsweise nichtionische Celluloseether wie Methylcellulose und Methylhydroxypropylcellulose mit einem Anteil an Methoxygruppen von 15 bis 30 Gew.-% und an Hydroxypropylgruppen von 1 bis 15 Gew.-%, jeweils bezogen auf den nichtionischen Celluloseether. Geeignete Soil-Release-Polymere sind beispielsweise Polyester aus Polyethylenoxiden mit Ethylenglycol und/oder Propylenglycol und aromatischen Dicarbonsäuren oder aromatischen und aliphatischen Dicarbonsäuren; Polyester aus einseitig endgruppenverschlossenen Polyethylenoxiden mit zwei- und/oder mehrwertigen Alkoholen und Dicarbonsäure, insbesondere Polymere aus Ethylenterephthalaten und/oder Polyethylenglycolterephthalaten oder anionisch und/oder nichtionisch modifizierten Derivaten von diesen. Insbesondere bevorzugt von diesen sind die sulfonierten Derivate der Phthalsäure- und Terephthalsäure-Polymere. Derartige Polyester sind bekannt, beispielsweise aus US 3,557,039, GB-A 11 54 730, EP-A 0 185 427, EP-A 0 241 984, EP-A 0 241 985, EP-A 0 272 033 und US-A 5,142,020. Weitere geeignete Soil-Release-Polymere sind amphiphile Pfopf- oder Copolymere von Vinyl- und/oder Acrylestern auf Polyalkylenoxide (vgl. US 4,746,456, US 4,846,995, DE-A 37 11 299, US 4,904,408, US 4,846,994 und US 4,849,126) oder modifizierte Cellulosen wie z.B. Methylcellulose, Hydroxypropylcellulose oder Carboxymethylcellulose.

Optische Aufheller (sogenannte "Weißtöner") können den flüssigen Wasch- oder Reinigungsmitteln zugesetzt werden, um Vergrauungen und Vergilbungen der behandelten Textilen Flächengebilden zu beseitigen. Diese Stoffe ziehen auf die Faser auf und bewirken eine Aufhellung und vorgetäuschte Bleichwirkung, indem sie unsichtbare Ultraviolettstrahlung in sichtbares längerwelliges Licht umwandeln, wobei das aus dem Sonnenlicht absorbierte ultraviolette Licht als schwach bläuliche Fluoreszenz abgestrahlt wird und mit dem Gelbton der vergrauten bzw. vergilbten Wäsche reines Weiß ergibt. Geeignete Verbindungen stammen beispielsweise aus den Substanzklassen der 4,4'-Diamino-2,2'-stilbendisulfonsäuren (Flavonsäuren), 4,4'-Distyryl-biphenylen, Methylumbelliferone, Cumarine, Dihydrochinolinone, 1,3- Diarylpyrazoline, Naphthalsäureimide, Benzoxazol-, Benzisoxazol- und Benzimidazol-Systeme sowie der durch Heterocyclen substituierten Pyrenderivate. Die optischen Aufheller werden üblicherweise in Mengen zwischen 0,03 und 0,3 Gew.-%, bezogen auf das fertige Mittel, eingesetzt.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise Leim, Gelatine, Salze von Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, zum Beispiel abgebaute Stärke, Aldehydstärken usw. Auch Polyvinylpyrrolidon ist brauchbar. Bevorzugt werden jedoch Celluloseether wie Carboxymethylcellulose (Na-Salz), Methylcellulose, Hydroxyalkylcellulose und Mischether wie Methylhydroxyethylcellulose, Methylhydroxypropylcellulose, Methylcarboxymethylcellulose und deren Gemische in Mengen von 0,1 bis 5 Gew.-%, bezogen auf die Mittel, eingesetzt.

Da textile Flächengebilde, insbesondere aus Reyon, Zellwolle, Baumwolle und deren Mischungen, zum Knittern neigen können, weil die Einzelfasern gegen Durchbiegen, Knicken, Pressen und Quetschen quer zur Faserrichtung empfindlich sind, können die Mittel synthetische Knitterschutzmittel enthalten. Hierzu zählen beispielsweise synthetische Produkte auf der Basis von Fettsäuren, Fettsäureestern, Fettsäureamiden, Fettalkylolestern, Fettalkylolamiden oder Fettalkoholen, die meist mit Ethylenoxid umgesetzt sind, oder Produkte auf der Basis von Lecithin oder modifizierter Phosphorsäureester.

Zur Bekämpfung von Mikroorganismen können die flüssigen Wasch- oder Reinigungsmittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat.

Um unerwünschte, durch Sauerstoffeinwirkung und andere oxidative Prozesse verursachte Veränderungen an den flüssigen Wasch- oder Reinigungsmitteln und/oder den behandelten textilen Flächengebilden zu verhindern, können die Mittel Antioxidantien enthalten. Zu dieser Verbindungsklasse gehören beispielsweise substituierte Phenole, Hydrochinone, Brenzcatechine und aromatische Amine sowie organische Sulfide, Polysulfide, Dithiocarbamate, Phosphite und Phosphonate.

Ein erhöhter Tragekomfort kann aus der zusätzlichen Verwendung von Antistatika resultieren, die den Mitteln zusätzlich beigefügt werden. Antistatika vergrößern die Oberflächenleitfähigkeit und ermöglichen damit ein verbessertes Abfließen gebildeter Ladungen. Äußere Antistatika sind in der Regel Substanzen mit wenigstens einem hydrophilen Molekülliganden und geben auf den Oberflächen einen mehr oder minder hygroskopischen Film. Diese zumeist grenzflächenaktiven Antistatika lassen sich in stickstoffhaltige (Amine, Amide, quartäre Ammoniumverbindungen), phosphorhaltige (Phosphorsäureester) und schwefelhaltige (Alkylsulfonate, Alkylsulfate) Antistatika unterteilen. Externe Antistatika sind beispielsweise in den Patentanmeldungen FR 1,156,513, GB 873 214 und GB 839 407 beschrieben. Die hier offenbarten Lauryl-(bzw. Stearyl-) dimethylbenzylammoniumchloride eignen sich als Antistatika für textile Flächengebilde bzw. als Zusatz zu Waschmitteln, wobei zusätzlich ein Avivageeffekt erzielt wird.

Zur Verbesserung des Wasserabsorptionsvermögens, der Wiederbenetzbarkeit der behandelten textilen Flächengebilde und zur Erleichterung des Bügelns der behandelten textilen Flächengebilde können in den flüssigen Wasch- oder Reinigungsmitteln beispielsweise Silikonderivate eingesetzt werden. Diese verbessern zusätzlich das Ausspülverhalten der Mittel durch ihre schauminhibierenden Eigenschaften. Bevorzugte Silikonderivate sind beispielsweise Polydialkyl- oder Alkylarylsiloxane, bei denen die Alkylgruppen ein bis fünf C-Atome aufweisen und ganz oder teilweise fluoriert sind. Bevorzugte Silikone sind Polydimethylsiloxane, die gegebenenfalls derivatisiert sein können und dann aminofunktionell oder quaterniert sind bzw. Si-OH-, Si-H und/oder Si-CI-Bindungen aufweisen. Die Viskositäten der bevorzugten Silikone liegen bei 25 °C im Bereich zwischen 100 und 100 000 mPas, wobei die Silikone in Mengen zwischen 0,2 und 5 Gew.-%, bezogen auf das gesamte Mittel eingesetzt werden können.

Schließlich können die flüssigen Wasch- oder Reinigungsmittel auch UV-Absorber enthalten, die auf die behandelten textilen Flächengebilde aufziehen und die Lichtbeständigkeit der Fasern verbessern. Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenylsubstituierte Acrylate (Zimtsäurederivate), gegebenenfalls mit Cyanogruppen in 2-Stellung, Salicylate, organische Ni-Komplexe sowie Naturstoffe wie Umbelliferon und die körpereigene Urocansäure geeignet.

Um die durch Schwermetalle katalysierte Zersetzung bestimmter Waschmittel-Inhaltsstoffe zu vermeiden, können Stoffe eingesetzt werden, die Schwermetalle komplexieren. Geeignete Schwermetallkomplexbildner sind beispielsweise die Alkalisalze der Ethylendiamintetraessigsäure (EDTA), der Nitrilotriessigsäure (NTA) oder Methylglycindiessigsäure (MGDA) sowie Alkalimetallsalze von anionischen Polyelektrolyten wie Polymaleaten und Polysulfonaten.

Eine bevorzugte Klasse von Komplexbildnern sind die Phosphonate, die in bevorzugten flüssigen Wasch- oder Reinigungsmitteln in Mengen von 0,01 bis 2,5 Gew.-%, vorzugsweise 0,02 bis 2 Gew.-% und insbesondere von 0,03 bis 1 ,5 Gew.-% enthalten sind. Zu diesen bevorzugten Verbindungen zählen insbesondere Organophosphonate wie beispielsweise 1-Hydroxyethan-1 ,1-diphosphonsäure (HEDP), Aminotri(methylenphosphonsäure) (ATMP), Diethylentriamin-penta(methylenphosphonsäure) (DTPMP bzw. DETPMP) sowie 2-Phosphonobutan-1,2,4-tricarbonsäure (PBS-AM), die zumeist in Form ihrer Ammonium- oder Alkalimetallsalze eingesetzt werden.

Die erhaltenen wässrigen flüssigen Wasch- oder Reinigungsmittel weisen keinen Bodensatz auf; in einer bevorzugten Ausführungsform sind sie transparent oder zumindest transluzent. Vorzugsweise weisen die wässrigen flüssigen Wasch- oder Reinigungsmittel eine Transmission des sichtbaren Lichtes von mindestens 30%, vorzugsweise 50%, insbesondere bevorzugt 75%, am meisten bevorzugt 90% auf. Alternativ können die erfindungsgemäßen Verdicker in opake Wasch- oder Reinigungsmittel eingearbeitet werden.

Neben diesen Bestandteilen kann ein wässriges Wasch- oder Reinigungsmittel dispergierte Partikel, deren Durchmesser entlang ihrer größten räumlichen Ausdehnung 0,01 bis 10 000 µm beträgt, enthalten.

Partikel können Mikrokapseln als auch Granulate, Compounds und Duftperlen sein, wobei Mikrokapseln bevorzugt sind.

Unter dem Begriff "Mikrokapsel" werden Aggregate verstanden, die mindestens einen festen oder flüssigen Kern enthalten, der von mindestens einer kontinuierlichen Hülle, insbesondere einer Hülle aus Polymer(en), umschlossen ist. Üblicherweise handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Bevorzugt sind einkernige Mikrokapseln mit einer kontinuierlichen Hülle. Die Hülle kann aus natürlichen, halbsynthetischen oder synthetischen Materialien bestehen. Natürlich Hüllmaterialien sind beispielsweise Gummi arabicum, Agar Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Im Inneren der Mikrokapseln können empfindliche, chemisch oder physikalisch inkompatible sowie flüchtige Komponenten (= Wirkstoffe) des wässrigen flüssigen Wasch- oder Reinigungsmittels lager- und transportstabil eingeschlossen werden. In den Mikrokapseln können sich beispielsweise optische Aufheller, Tenside, Komplexbildner, Bleichmittel, Bleichaktivatoren, Färbund Duftstoffe, Antioxidantien, Gerüststoffe, Enzyme, Enzym-Stabilisatoren, antimikrobielle Wirkstoffe, Vergrauungsinhibitoren, Antiredepositionsmittel, pH-Stellmittel, Elektrolyte, Schauminhibitoren und UV-Absorber befinden.

Die Mikrokapseln können ferner kationische Tenside, Vitamine, Proteine, Konservierungsmittel, Waschkraftverstärker oder Perlglanzgeber enthalten. Die Füllungen der Mikrokapseln können Feststoffe oder Flüssigkeiten in Form von Lösungen oder Emulsionen bzw. Suspensionen sein.

Die Mikrokapseln können im herstellungsbedingten Rahmen eine beliebige Form aufweisen, sie sind jedoch bevorzugt näherungsweise kugelförmig. Ihr Durchmesser entlang ihrer größten räumlichen Ausdehnung kann je nach den in ihrem Inneren enthaltenen Komponenten und der Anwendung zwischen 0,01 µm (visuell nicht als Kapsel erkennbar) und 10 000 µm liegen. Bevorzugt sind sichtbare Mikrokapseln mit einem Durchmesser im Bereich von 100 µm bis 7 000 µm, insbesondere von 400 µm bis 5 000 µm. Die Mikrokapseln sind nach bekannten Verfahren zugänglich, wobei der Koazervation und der Grenzflächenpolymerisation die größte Bedeutung zukommt. Als Mikrokapseln lassen sich sämtliche auf dem Markt angebotenen tensidstabilen Mikrokapseln einsetzen, beispielsweise die Handelsprodukte (in Klammern angegeben ist jeweils das Hüllmaterial) Hallcrest Microcapsules (Gelatine, Gummi Arabicum), Coletica Thalaspheres (maritimes Collagen), Lipotec Millicapseln (Alginsäure, Agar-Agar), Induchem Unispheres (Lactose, mikrokristalline Cellulose, Hydroxypropylmethylcellulose); Unicerin C30 (Lactose, mikrokristalline Cellulose, Hydroxypropylmethylcellulose), Kobo Glycospheres (modifizierte Stärke, Fettsäureester, Phospholipide), Softspheres (modifiziertes Agar Agar) und Kuhs Probiol Nanospheres (Phospholipide).

Alternativ können auch Partikel eingesetzt werden, die keine Kern-Hülle-Struktur aufweisen, sondern in denen der Wirkstoff in einer Matrix aus einem matrix-bildenden Material verteilt ist. Solche Partikel werden auch als "Speckies" bezeichnet.

Ein bevorzugtes matrix-bildendes Material ist Alginat. Zur Herstellung Alginat-basierter Speckies wird eine wässrige Alginat-Lösung, welche auch den einzuschließenden Wirkstoff bzw. die einzuschließenden Wirkstoffe enthält, vertropft und anschließend in einem Ca²⁺-Ionen oder Al³⁺-Ionen enthaltendem Fällbad ausgehärtet.

Alternativ können anstelle von Alginat andere, matrix-bildende Materialien eingesetzt werden. Beispiele für matrix-bildende Materialien umfassen Polyethylenglykol, Polyvinylpyrrolidon, Polymethacrylat, Polylysin, Poloxamer, Polyvinylalkohol, Polyacrylsäure, Polyethylenoxid, Polyethoxyoxazolin, Albumin, Gelatine, Acacia, Chitosan, Cellulose, Dextran, Ficoll®, Stärke, Hydroxyethylcellulose, Hydroxypropylcellulose, Hydroxypropylmethylcellulose, Hyaluronsäure, Carboxymethylcellulose, Carboxymethylcellulose, deacetyliertes Chitosan, Dextransulfat und Derivate dieser Materialien. Die Matrixbildung erfolgt bei diesen Materialien beispielsweise über Gelierung, Polyanion-Polykation-Wechselwirkungen oder Polyelektrolyt-MetallionWechselwirkungen. Die Herstellung von Partikeln mit diesen matrixbildenden Materialien ist an sich bekannt.

Die Partikel können stabil in den wässrigen flüssigen Wasch- oder Reinigungsmittel dispergiert werden. Stabil bedeutet, dass die Mittel bei Raumtemperatur und bei 40 °C über einen Zeitraum von mindestens 4 Wochen und bevorzugt von mindestens 6 Wochen stabil sind, ohne dass die Mittel aufrahmen oder sedimentieren. Die erfindungsgemäßen Verdicker bewirken durch die Viskositätserhöhung eine kinetische Verlangsamung der Sedimentation der Partikel und somit deren Stabilisierung im Schwebezustand.

Die Freisetzung der Wirkstoffe aus den Mikrokapseln oder Speckies erfolgt üblicherweise während der Anwendung der sie enthaltenden Mittel durch Zerstörung der Hülle bzw. der Matrix infolge mechanischer, thermischer, chemischer oder enzymatischer Einwirkung.

Die erfindungsgemäßen Wasch- oder Reinigungsmittel können zum Reinigen von textilen Flächengeweben und/oder harten Oberflächen verwendet werden. Erfindungsgemäße Reinigungsmittel können in Form eines Hand- oder Maschinengeschirrspülmittels, Allzweckreiniger für nicht-textile Oberflächen, z.B. aus Metall, lackiertem Holz oder Kunststoff, oder Reinigungsmittel für keramische Erzeugnisse, wie Porzellan, Fliesen, Kacheln vorliegen. Die Wasch- oder Reinigungsmittel können flüssig oder pastös formuliert werden.

Zur Herstellung der flüssigen Wasch- oder Reinigungsmittel können die Tenside, der Assoziativverdicker und die fakultativen Komponenten in beliebiger Reihenfolge miteinander vereint werden. Zum Beispiel können die sauren Komponenten wie beispielsweise die linearen Alkylsulfonate, Zitronensäure, Borsäure, Phosphonsäure, die Fettalkoholethersulfate, usw. vorgelegt und die nichtionischen Tenside zugegeben werden. Anschließend wird eine Base wie beispielsweise NaOH, KOH, Triethanolamin oder Monoethanolamin gefolgt von der Fettsäure, falls vorhanden, zugegeben. Darauffolgend werden die restlichen Inhaltsstoffe und die Lösungsmittel des wässrigen flüssigen Wasch- oder Reinigungsmittel zu der Mischung gegeben. Dann wird der erfindungsgemäße Assoziativverdicker zugegeben und, gegebenenfalls der pH-Wert korrigiert, z. B. auf einen Wert von 8 bis 9,5.

Ein besonderer Vorteil der erfindungsgemäßen Assoziativverdicker besteht darin, dass sie sich zur nachträglichen Einarbeitung in eine Wasch- oder Reinigungsmittelvorformulierung (post addition) eignen. Eine nachträgliche Einarbeitung der Verdickerdispersion vereinfacht den Produktionsablauf und ist vorteilhaft, da die Wasch- oder Reinigungsmittel erst in einem späten Stadium ihrer Herstellung eine hohe Viskosität erlangen. Sie erlaubt eine zielgenaue Viskositätseinstellung. Da die Handhabung, z. B. das Umpumpen, Mischen oder Homogenisieren, niedrigviskoser Flüssigkeiten schneller und einfacher erfolgt, kann die niedrigviskose Vorformulierung mit kürzerer Ansatzzeit und geringerem Energieaufwand hergestellt werden.

Üblicherweise können bei der nachträglichen Einarbeitung von Verdickern vermehrt Inkompatibilitäten mit den übrigen Bestandteilen der Wasch- oder Reinigungsmittel auftreten, die zu einem ungenügenden Viskositätsaufbau und/oder verschlechterter Transparenz führen können. Überaschenderweise treten derartige Inkompatibilitäten mit den erfindungsgemäßen Assoziativverdickern nicht auf.

Gegebenenfalls können abschließend zu dispergierende Partikel zugegeben und durch Mischen homogen in dem wässrigen flüssigen Wasch- oder Reinigungsmittel verteilt werden.

Die Erfindung wird durch die folgenden Beispiele näher veranschaulicht.

### Vergleichsbeispiel 1

Die Copolymerisatherstellung erfolgte gemäß der nachstehend beschriebenen Methode. Die resultierende wässrige Polymerdispersion enthielt die Copolymerisate in deren Säureform.

In einer Rührapparatur, bestehend aus einem 4 Liter HWS Gefäß mit Ankerrührer (150 Upm), Rückflusskühler, Innenthermofühler und Dosierstation, wurden als Vorlage 736,73 g entsalztes Wasser (VE-Wasser) und 10,71 g Emulgator Texapon NSO (Natriumlaurylethersulfat; 28%ig in Wasser) gemischt.

Dieser Lösung wurden bei 75 °C 4,23 g einer 7%igen wässrigen Natriumperoxodisulfat-Lösung zugegeben und die Mischung bei 75 °C während 5 Minuten gerührt. Danach wurden bei 75 °C unter weiterem Rühren eine Emulsion bestehend aus 457,04 g vollständig entsalztem Wasser (VE-Wasser), den Monomeren (183,67 g Methacrylsäure und 360 g Ethylacrylat, 15 g Lutensol AT 25 Methacrylat [= (C₁₆₋₁₈)-(EO)₂₅-Methacrylat], 45 g Methylmethacrylat) und 10,71 g Emulgator Texapon NSO-28%ig in Wasser während 2 Stunden sowie gleichzeitig 12,06 g 7 %ige wässrige Natriumperoxodisulfat-Lösung während 2 Stunden gleichmäßig zudosiert. Anschließend wurde die Reaktionsmischung noch 1 Std. bei 75°C gerührt und danach auf Raumtemperatur gebracht. Bei Raumtemperatur wurden 0,3 g einer 4 %igen Dissolvine E-FE-6 Lösung (Eisen(II)-salzlösung) und 12 g einer 5%igen Wasserstoffperoxidlösung zugegeben und 90g einer 1 %igen Ascorbinsäure-Lösung während 30 min. gleichmäßig zudosiert. Man erhielt eine wässrige Polymerdispersion mit 31 % Feststoffgehalt.

Die in der nachstehenden Tabelle 1 aufgeführten Assoziativverdicker-Dispersionen gemäß Vergleichsbeispiel 2 und 3 wurden analog hergestellt.

### Beispiel 1

In einer Rührapparatur, bestehend aus einem 4 Liter HWS Gefäß mit Ankerrührer (150 Upm), Rückflusskühler, Innenthermofühler und Dosierstation, wurden als Vorlage 736,73 g entsalztes Wasser (VE-Wasser) und 10,71 g Emulgator Texapon NSO-28%ig in Wasser gemischt.

Dieser Lösung wurden bei 75 °C 4,23 g einer 7%igen wässrigen Natriumperoxodisulfat-Lösung zugegeben und die Mischung bei 75 °C während 5 Minuten gerührt. Danach wurden bei 75 °C unter weiterem Rühren die Emulsion bestehend aus 457,04 g vollständig entsalztem Wasser (VE-Wasser), den Monomeren (183,67 g Methacrylsäure und 300 g Ethylacrylat, 60 g n-Butylacrylat, 15 g Lutensol AT 25 Methacrylat, 45 g Methylmethacrylat) und 10,71 g Emulgator Texapon NSO-28%ig in Wasser während 2 Stunden sowie gleichzeitig 12,06 g 7 %ige wässrigen Natriumperoxodisulfat-Lösung während 2 Stunden gleichmäßig zudosiert (Emulsion und NaPS-Zulauf kombinieren). Anschließend wurde die Reaktionsmischung noch 1 Std. bei 75°C gerührt und danach auf Raumtemperatur gebracht. Bei Raumtemperatur wurden 0,3 g einer 4 %igen Dissolvine E-FE-6 Lösung und 12 g einer 5%igen Wasserstoffperoxidlösung zugegeben und 90 g einer 1 %igen Ascorbinsäure-Lösung während 30 min. gleichmäßig zudosiert. Man erhielt eine wässrige Polymerdispersion mit 31 % Feststoffgehalt.

Die übrigen in der nachstehenden Tabelle 1 aufgeführten Assoziatiwerdicker-Dispersionen, Beispiel 2 bis Beispiel 9, wurden analog hergestellt, wobei der erhöhte Gehalt des hydrophoben Monomers Butylacrylat auf Kosten des Ethylacrylats eingeführt wurde. Die Mengenangaben für die Einsatzstoffe sind in Teilen pro 100 reaktive Monomerteile (parts per hundred monomers; pphm) angegeben. Zur Charakterisierung der Dispersion wurden folgende Werte gemessen:
Feststoffgehalt: Die Dispersion wurde 30 min bei 140 °C getrocknet und der Feststoffgehalt in Prozent aus dem Verhältnis Trockenrückstand zu Einwaage bestimmt.

Teilchengröße: Die Dispersion wurde auf 0,01 % verdünnt und die Teilchengröße über Lichtstreuung im High Performance Particle Sizer 5001 (HPPS) von der Firma Malvern Instruments gemessen.

LD-Wert: Die Dispersion wurde auf 0,01 % verdünnt und die Lichtdurchlässigkeit (LD) der Dispersion im Vergleich zu reinem Wasser als ein Maß für die Teilchengröße optisch im Hach DR/2010 gemessen.

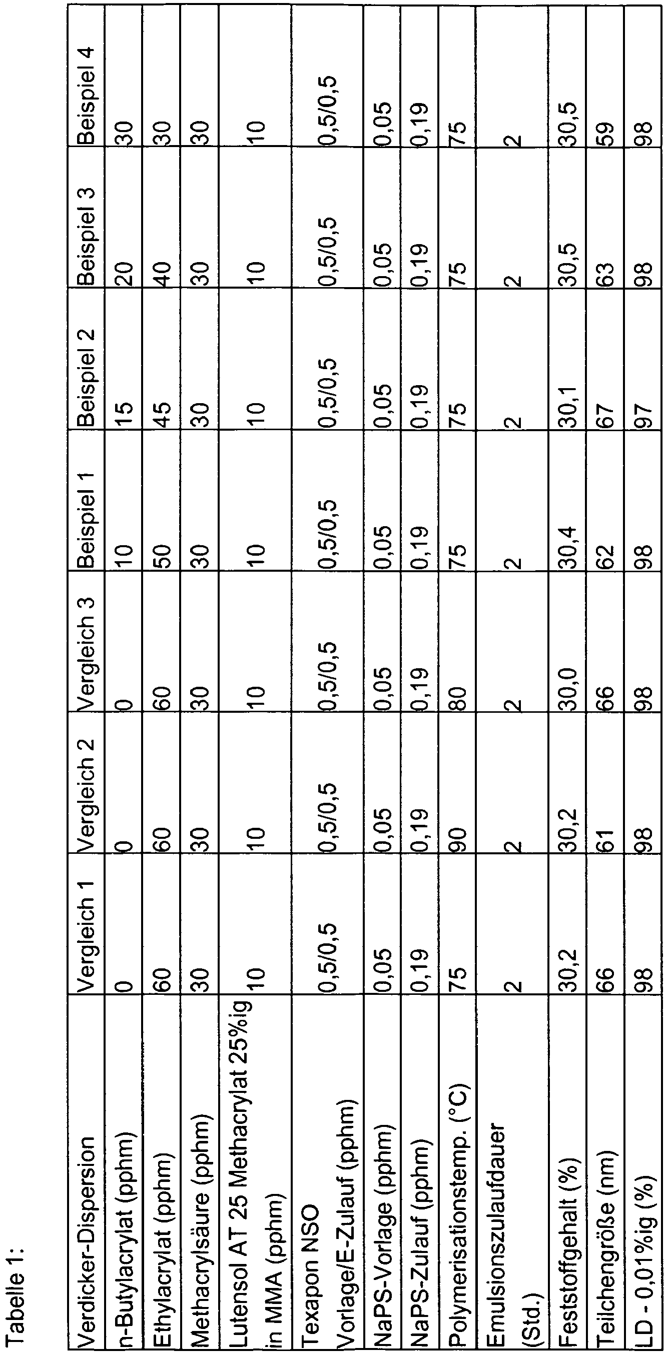

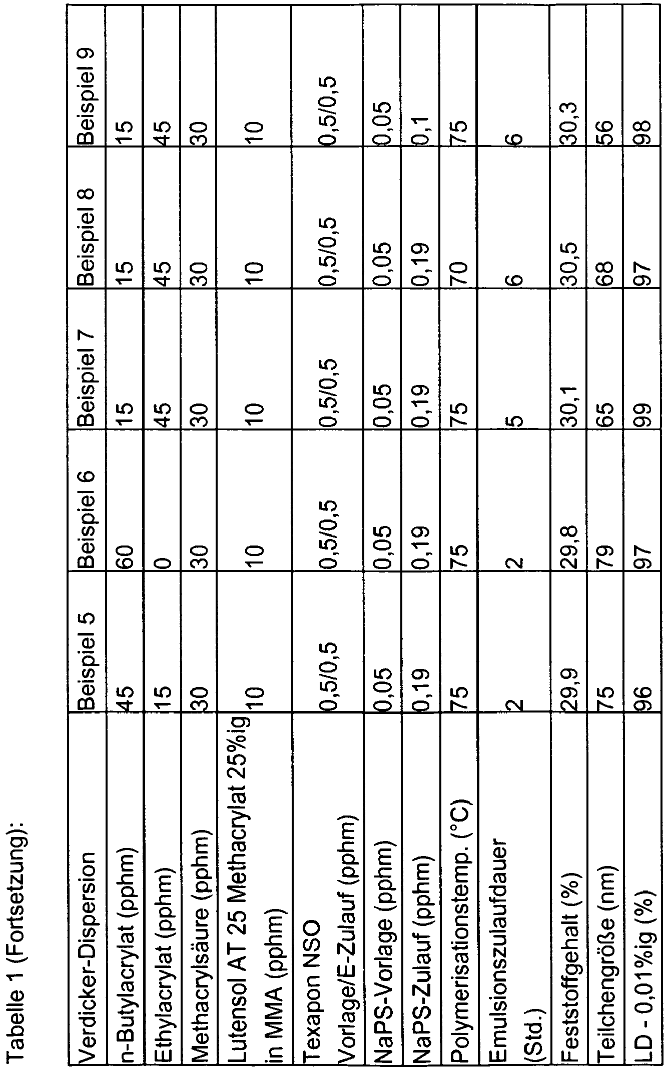

### Beispiel 10:

In einer Rührapparatur, bestehend aus einem 4 Liter HWS Gefäß mit Ankerrührer (150 Upm), Rückflusskühler, Innenthermofühler und Dosierstation, wurden als Vorlage 1129,41 g entsalztes Wasser (VE-Wasser) und 19,11 g Emulgator Texapon NSO-28%ig in Wasser gemischt.

Dieser Lösung wurde bei 75 °C ein Anteil von 25,99 g einer 7%igen wässrigen Natriumperoxodisulfat-Lösung zugegeben und die Mischung bei 75 °C während 5 Minuten gerührt. Danach wurden bei 75 °C unter weiterem Rühren die Emulsion bestehend aus 1000 g vollständig entsalztes Wasser (VE-Wasser), den Monomeren (327,55 g Methacrylsäure und 321 g Ethylacrylat, 321 g n-Butylacrylat, 26,75 g Lutensol AT 25 Methacrylat, 80,25 g Methylmethacrylat), dem Emulgator (38,21 g Texapon NSO-28%ig in Wasser) während 2 Stunden gleichmäßig zudosiert. Anschließend wurde die Reaktionsmischung noch 1 Std. bei 75°C gerührt und danach auf Raumtemperatur gebracht. Bei Raumtemperatur wurden 0,54 g einer 4 %igen Dissolvine E-FE-6 Lösung und 21,4 g einer 5%igen Wasserstoffperoxidlösung zugegeben und 160,5 g einer 1 %igen Ascorbinsäure-Lösung während 30 min. gleichmäßig zudosiert. Man erhielt eine wässrige Polymerdispersion mit 31 % Feststoffgehalt.

Die übrigen in der nachstehenden Tabelle 2 aufgeführten Assoziativverdicker-Dispersionen gemäß Beispiel 11 bis Beispiel 16 wurden analog hergestellt.

**Tabelle 2:**

| Verdicker-Dispersion | Beispiel 10 | Beispiel 11 | Beispiel 12 | Beispiel 13 | Beispiel 14 | Beispiel 15 | Beispiel 16 |
|---|---|---|---|---|---|---|---|
| n-Butylacrylat(pphm) | 30 | 30 | 30 | 30 | 30 | 30 | 30 |
| Ethylacrylat(pphm) | 30 | 30 | 30 | 30 | 30 | 30 | 30 |
| Methacrylsäure(pphm) | 30 | 30 | 30 | 30 | 30 | 30 | 30 |
| Lutensol AT 25 Methacrylat 25%ig in MMA (pphm) | 10 | 10 | 10 | 10 | 10 | 10 | 10 |
| Texapon NSO Vorl./E-Zul.(pphm) | 0,5/1 | 0,5/1 | 0,5/1 | 0,5/1 | 0,5/1 | 0,5/1 | 0,5/1 |
| NaPS-Vorl.(pphm) | 0,19 | 0,15 | 0,19 | 0,19 | 0,19 | 0,19 | 0,19 |
| NaPS-Zul.(pphm) | | | | | | | |
| Vorlage-Konz. (%) | 0,47 | 0,46 | 0,4 | 0,35 | 0,3 | 0,75 | 1 |
| Polymerisationstemp. (°C) | 75 | 75 | 75 | 75 | 75 | 75 | 75 |
| Feststoffgehalt (%) | 31,1 | 30,9 | 30,7 | 30,9 | 30,9 | 30,9 | 30,9 |
| Teilchengröße (nm) | 61 | 60 | 61 | 59 | 56 | 68 | 71 |
| LD - 0,01 %ig (%) | 97 | 97 | 98 | 95 | 98 | 97 | 97 |

### Beispiel 17:

In einer Rührapparatur, bestehend aus einem 4 Liter HWS Gefäß mit Ankerrührer (150 Upm), Rückflusskühler, Innenthermofühler und Dosierstation, wurden als Vorlage 250,5 g entsalztes Wasser (VE-Wasser), 8,93 g Emulgator Texapon NSO-28%ig in Wasser und 0,63 g einer 4%igen Dissolvine E-FE-6 Lösung (Eisen(II)-salzlösung) in Wasser gemischt. Die Vorlage wird mit Stickstoff gespült.

Dieser Lösung wurden bei 70 °C 5 g einer 5%igen Wasserstoffperoxid-Lösung und 3 g einer 0,25 %igen wässrigen Ascorbinsäure-Lösung zugegeben und die Mischung bei 70 °C 5 Minuten gerührt. Danach wurden bei 70 °C unter weiterem Rühren eine Emulsion aus 1098,86 g VE-Wasser, Monomeren (153,06 g Methacrylsäure, 75 g Ethylacrylat, 225 g n-Butylacrylat, 12,5 g Lutensol AT 25 Methacrylat [= (C₁₆₋₁₈)-(EO)₂₅-Methacrylat], 37,5 g Methylmethacrylat) und 8,93 g Emulgator Texapon NSO-28 %ig in Wasser während 4 Stunden gleichmäßig zudosiert. Gleichzeitig wurden 16 g einer 2,5 %igen t-Butylhydroperoxid-Lösung und 27 g einer 0,25 %igen wässrigen Ascorbinsäure-Lösung während 4,25 Stunden gleichmäßig zudosiert. Anschließend wurde die Reaktionsmischung noch 15 Minuten bei 70 °C gerührt und dann auf Raumtemperatur gebracht.

Bei Raumtemperatur wurden 10 g einer 5 %igen Wasserstoffperoxidlösung zugegeben und 75 g einer 1 %igen Ascorbinsäure-Lösung während 30 Minuten gleichmäßig zudosiert. Man erhielt eine wässrige Polymerdispersion mit etwa 25 % Feststoffgehalt.

Die übrigen in der nachstehenden Tabelle 3 aufgeführten Assoziativverdicker-Dispersionen gemäß Beispiel 18 bis Beispiel 22 wurden analog hergestellt, wobei in den Beispielen 20 bis 22 der Zulauf der t-Butylhydroperoxid-Lösung 15 Minuten nach Beginn des Monomeremulsions- und Ascorbinsäurezulaufs gestartet und während 4 Stunden gleichmäßig zudosiert wurde.

**Tabelle 3:**

| Verdicker-Dispersion | Beispiel 17 GK1355/ 1896 | Beispiel 18 1892 | Beispiel 19 1893 | Beispiel 20 1901 | Beispiel 21 1904 | Beispiel 22 1905 |
|---|---|---|---|---|---|---|
| n-Butylacrylat (pphm) | 45 | 15 | 30 | 15 | 15 | 15 |
| Ethylacrylat (pphm) | 15 | 45 | 30 | 45 | 45 | 45 |
| Methacrylsäure (pphm) | 30 | 30 | 30 | 30 | 30 | 30 |
| Lutensol AT 25 Methacrylat 25%ig in MMA (pphm) | 10 | 10 | 10 | 10 | 10 | 10 |
| Texapon NSO Vorlage/E-Zulauf (pphm) | 0,5/0,5 | 0,5/0,5 | 0,5/0,5 | 0,5/0,5 | 0,5/0,5 | 0,5/0,5 |
| Wasserstoffperoxid (pphm) | 0,05 | 0,05 | 0,05 | 0,1 | 0,1 | 0,1 |
| t-Butylhydroperoxid (pphm) | 0,075 | 0,075 | 0,075 | 0,075 | 0,050 | 0,025 |
| Ascorbinsäure (pphm) | 0,015 | 0,015 | 0,015 | 0,015 | 0,015 | 0,015 |
| Polymerisationstemp. (°C) | 70 | 70 | 70 | 70 | 70 | 70 |
| Feststoffgehalt (%) | 24,0 | 24,4 | 24,5 | 24,3 | 25,0 | 24,7 |
| Teilchengröße (nm) | 82 | 79 | 72 | 66 | 76 | 74 |
| LD - 0,01 %ig (%) | 96 | 96 | 97 | 99 | 97 | 97 |

### Beispiel 23:

In einer Rührapparatur, bestehend aus einem 4 Liter HWS Gefäß mit Ankerrührer (150 Upm), Rückflusskühler, Innenthermofühler und Dosierstation, wurden als Vorlage 715,66 g entsalztes Wasser (VE-Wasser) und 10,71 g Emulgator Texapon NSO-28%ig in Wasser gemischt. Die Vorlage wurde mit Stickstoff gespült.

Dieser Lösung wurden bei 60 °C ein Anteil von 12 g einer 2,5 %igen wässrigen Natriumperoxodisulfat-Lösung zugegeben und die Mischung bei 60 °C 5 Minuten gerührt. Danach wurden bei 60 °C unter weiterem Rühren eine Emulsion aus 457,04 g VE-Wasser, Monomeren (183,67 g Methacrylsäure, 270 g Ethylacrylat, 90 g n-Butylacrylat, 15 g Lutensol AT 25 Methacrylat [= (C₁₆₋₁₈)-(EO)₂₅-Methacrylat], 45 g Methylmethacrylat) und 10,71 g Emulgator Texapon NSO-28 %ig in Wasser während 2 Stunden, sowie gleichzeitig 12 g einer 2,5 %igen wässrigen Natriumperoxodisulfat-Lösung (Monomerzulauf und Natriumperoxodisulfat kombiniert) und 12 g einer 1 %igen wässrigen Ascorbinsäure-Lösung während 3 Stunden gleichmäßig zudosiert. Anschließend wurde die Reaktionsmischung noch 30 Minuten bei 60 °C gerührt und dann auf Raumtemperatur gebracht.

Bei Raumtemperatur wurden 0,3 g einer 4 %igen Dissolvine E-FE-6 Lösung (Eisen(II)-salzlösung) und 12 g einer 5 %igen Wasserstoffperoxidlösung zugegeben und 90 g einer 1 %igen Ascorbinsäure-Lösung während 30 Minuten gleichmäßig zudosiert. Man erhielt eine wässrige Polymerdispersion mit etwa 31 % Feststoffgehalt.

Die übrigen in der nachstehenden Tabelle 4 aufgeführten Assoziativverdicker-Dispersionen gemäß Beispiel 24 bis Beispiel .... wurden analog hergestellt.

**Tabelle 4:**

| Verdicker-Dispersion | Beispiel 23 GK1355/ 1888 | Beispiel 24 1884 | Beispiel 25 1859 | Beispiel 26 1882 | Beispiel 27 1881 | Beispiel 28 1880 |
|---|---|---|---|---|---|---|
| n-Butylacrylat (pphm) | 15 | 15 | 15 | 15 | 15 | 15 |
| Ethylacrylat (pphm) | 45 | 45 | 45 | 45 | 45 | 45 |
| Methacrylsäure (pphm) | 30 | 30 | 30 | 30 | 30 | 30 |
| Lutensol AT 25 Methacrylat 25%ig in MMA (pphm) | 10 | 10 | 10 | 10 | 10 | 10 |
| Texapon NSO Vorlage/E-Zulauf (pphm) | 0,5/0,5 | 0,5/0,5 | 0,5/0,5 | 0,5/0,5 | 0,5/0,5 | 0,5/0,5 |
| NaPS Vorl./Zul.(pphm) | 0,05/0,05 | 0,04/0,11 | 0,05/0,14 | 0,07/0,21 | 0,11/0,31 | 0,02/0,17 |
| Ascorbinsäure (pphm) | 0,02 | 0,02 | 0,02 | 0,02 | 0,02 | 0,01 |
| Polymerisationstemp. (°C) | 60 | 60 | 60 | 60 | 60 | 70 |
| Feststoffgehalt (%) | 30,4 | 30,3 | 29,7 | 30,2 | 30,1 | 29,4 |
| Teilchengröße (nm) | 75 | 66 | 69 | 75 | 86 | 65 |
| LD - 0,01%ig (%) | 97 | 98 | 98 | 97 | 95 | 97 |

### Herstellung eines Flüssigwaschmittels

Man stellte die folgenden Stammformulierungen her (Gew.-%, bezogen auf die Fertigformulierung):

| | Formulierung 1 | Formulierung 2 |
|---|---|---|
| Lutensit A-LBS (99%; lineares Alkylsulfonat in Säureform) | 17,92 | 13,44 |
| Lutensol AO 7 (nichtionische Tensid) | 20 | 10 |
| Kokosfettsäure Edenor K8-18 | 8,5 | 8,5 |
| KOH | 5 | 4,38 |
| Natriumcitrat-dihydrat | 3 | 3 |
| 1,2-Propylenglykol | 8 | 8 |
| Ethanol | 2 | 2 |
| Wasser | qs | qs |

Die obigen Bestandteile wurden gemischt und mit Wasser auf 90 Gew.-% aufgefüllt, d.h. es verblieb eine Formulierungslücke von 10 Gew.-%. Die Stammformulierungen wurden mit KOH auf pH 8,6 eingestellt.

Für die (unverdickten) Referenzformulierungen wurden die Stammformulierungen mit Wasser auf 100 Gew.-% aufgefüllt. Für die verdickten Testformulierungen wurden die Stammformulierungen mit Verdickerdispersion und Wasser aufgefüllt, so dass sich unter Berücksichtigung des Feststoffgehalts der Dispersion eine Verdickerkonzentration von 1,5 Gew.-%, bezogen auf die Fertigformulierung, einstellte. Vor der Viskositätsmessung ließ man die Formulierungen wenigstens 5 Stunden ruhen.

Die Low-Shear-Viskosität wurde unter Berücksichtigung der Vorschriften nach DIN 51550, DIN 53018, DIN 53019 mit dem Brookfield Viskosimeter Modell RV-03 bei einer Drehzahl von 20 Umdrehungen pro Minute mit der Spindel Nr. 62 bei 20 °C gemessen. Die Viskosität der unverdickten Referenzformulierungen betrug 128 mPas (Formulierung 1) bzw. 112 mPas (Formulierung 2).

Die Transmission wurde in % bei 440 nm bei 23 °C gemessen. Die gefundenen Werte sind als Prozentwert, relativ zur Transmission der unverdickten Referenzformulierung angegeben.

Die Ergebnisse sind in den Tabellen 5 und 6 zusammengefasst.

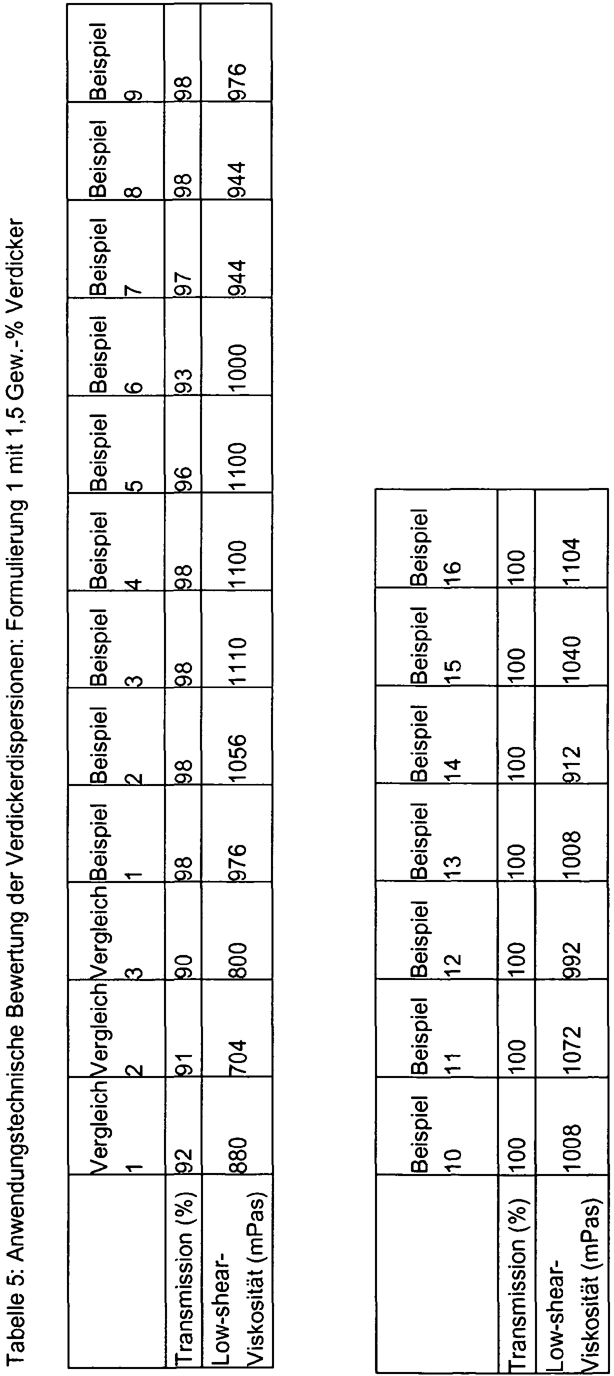

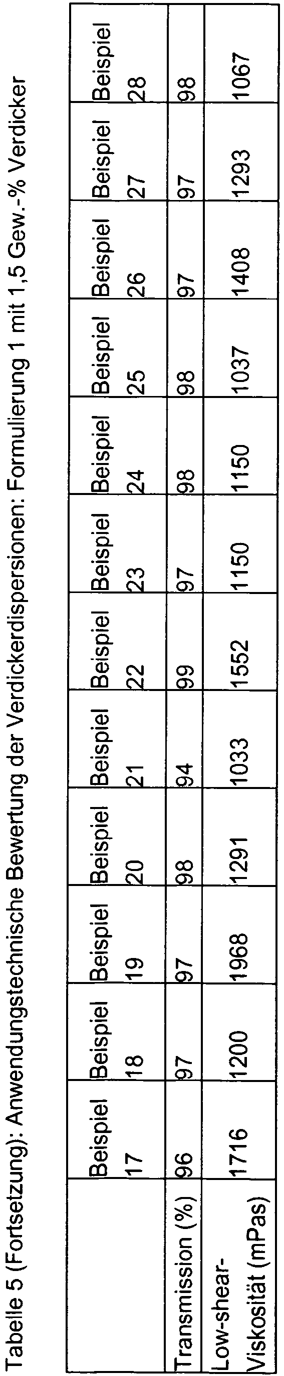

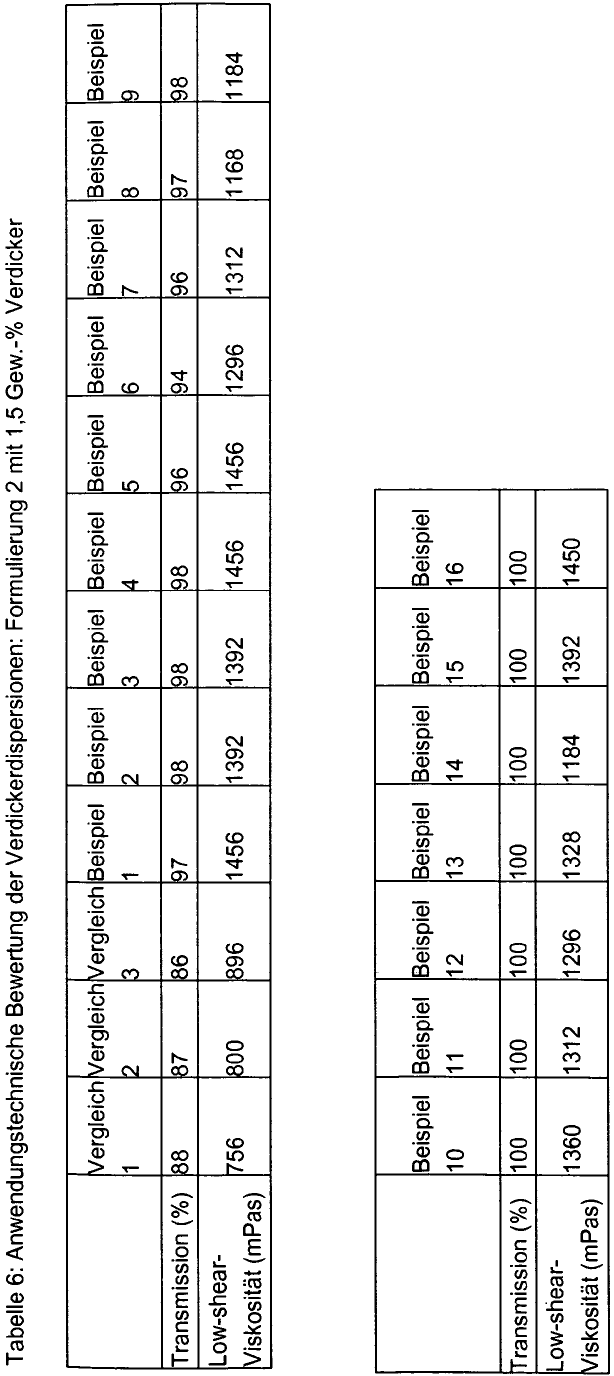

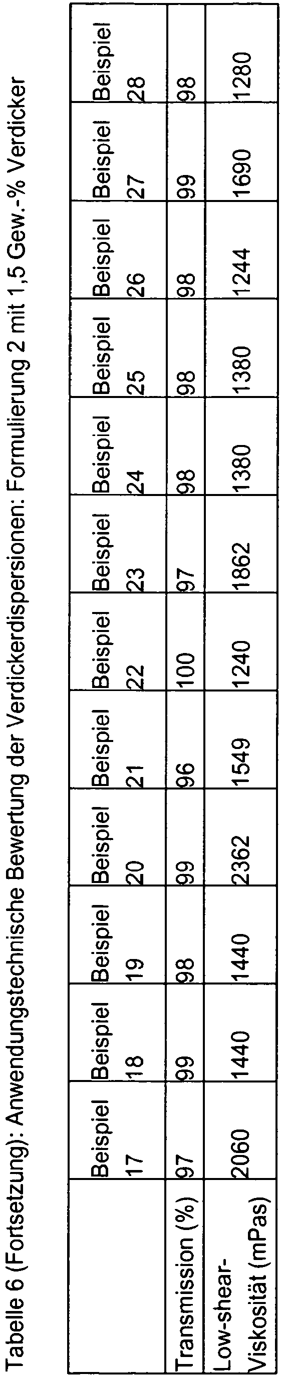

Man erkennt, dass die Vergleichsbeispiele 1 bis 3, die kein n-Butylacrylat enthalten, einen unzureichenden Viskositätsaufbau zeigen. Man erkennt ferner, dass die Beispiele 10 bis 16, bei denen der Polymerisationsinitiator vollständig vorgelegt wurde, neben einer hohen Verdickungsleistung eine verbesserte Transparenz im Flüssigwaschmittel zeigen.

Es wurde die Eignung verschiedener handelsüblicher Rheologiemodifizierer (acrylische Assoziativverdicker vom Typ HASE (Hydrophobically modified, alkali-swellable emulsion)) zur nachträglichen Einarbeitung (post addition) untersucht. Hierzu wurde die obige Stammformulierung 2 mit Verdicker und Wasser aufgefüllt, so dass sich unter Berücksichtigung des Feststoffgehalts des Verdickers eine Verdickerkonzentration von 1,5 Gew.-%, bezogen auf die Fertigformulierung, einstellte. Das Beispiel 16 ist zum Vergleich mit aufgeführt.

| | Beispiel 16 | Acusol 820¹⁾ | Carbopol Aqua 30²⁾ | Alcoguard 5800³⁾ |
|---|---|---|---|---|
| Transmission (%) | 100 | 67 | 42 | 50 |
| Low-shear-Viskosität (mPas) | 1450 | 624 | 512 | 512 |

| | | | | |
|---|---|---|---|---|
| 1) Acusol 820, hydrophob modifizierte, alkalilösliche Acrylpolymeremulsion; flüssig, etwa 30% Aktivgehalt; Rohm und Haas 2) Carbopol, gering vernetztes alkalquellbares Acrylemulsionspolymer, flüssig, etwa 30% Aktivgehalt; Noveon 3) Alcoguard 5800, assoziativer acrylischer Rheologiemodifizierer, flüssig, etwa 30% Aktivgehalt; Alco Chemical | | | | |

## Patentansprüche

1. Assoziativverdicker, enthaltend eine wässrige Dispersion eines alkalilöslichen-Copolymers mit einpolymerisierten Einheiten
a) 10 bis 75 Gew.-% wenigstens einer ethylenisch ungesättigten Carbonsäure,
b) wenigstens eines nichtionischen ethylenisch ungesättigten Tensidmonomers,
c) wenigstens eines C₁-C₂-Alkylmethacrylats,
d) wenigstens eines C₂-C₄-Alkylacrylats, wobei die über die Zahl der Alkylgruppen des Alkylacrylats gemittelte Alkylkettenlänge 2,1 bis 4,0 beträgt.

2. Assoziativverdicker nach Anspruch 1, worin das Copolymer außerdem einpolymerisierte Einheiten eines mehrfach ethylenisch ungesättigten Monomers enthält.

3. Assoziativverdicker nach Anspruch 1 oder 2, worin das nichtionische ethylenisch ungesättigte Tensidmonomer die allgemeine Formel aufweist
R-O-(CH₂-CHR'-O)ₙ-CO-CR"=CH₂
worin R für C₆-C₃₀-Alkyl steht,
R' für Wasserstoff oder Methyl steht,
R" für Wasserstoff oder Methyl steht, und
n für eine ganze Zahl von 2 bis 100 steht.

4. Assoziativverdicker nach einem der vorhergehenden Ansprüche, worin die ethylenisch ungesättigte Carbonsäure ausgewählt ist unter Acrylsäure, Methacrylsäure, Itaconsäure und Maleinsäure.

5. Assoziativverdicker nach einem der vorhergehenden Ansprüche, worin das Copolymer 5 bis 85 Gew.-%, bezogen auf das Gesamtgewicht des Copolymers, einpolymerisierte Einheiten von n-Butylacrylat enthält.

6. Assoziativverdicker nach einem der vorhergehenden Ansprüche, worin das Copolymer ein einstufiges Copolymer ist.

7. Assoziativverdicker nach einem der vorhergehenden Ansprüche, worin die wässrige Dispersion außerdem einen anionischen und/oder einen nichtionischen Emulgator enthält.

8. Assoziativverdicker nach Anspruch 7, worin der Emulgator die allgemeine Formel aufweist
R-O-(CH₂-CHR'-O)ₙ-X
worin R für C₆-C₃₀-Alkyl steht,
R' für Wasserstoff oder Methyl steht,
X für Wasserstoff oder SO₃M steht,
M für Wasserstoff oder ein Alkalimetall steht, und
n für eine ganze Zahl von 2 bis 100 steht.

9. Assoziativverdicker nach einem der vorhergehenden Ansprüche, erhältlich durch Polymerisation eines Monomerengemisches in Gegenwart eines thermisch aktivierbaren radikalischen Polymerisationsinitiators.

10. Assoziativverdicker nach Anspruch 9, wobei man den thermisch aktivierbaren radikalischen Polymerisationsinitiator vollständig vorlegt und das Monomerengemisch zulaufen lässt.

11. Assoziativverdicker nach einem der Ansprüche 1 bis 8, erhältlich durch Polymerisation eines Monomerengemisches in Gegenwart eines Redoxinitiatorsystems.

12. Flüssige Wasch- oder Reinigungsmittelzusammensetzung, enthaltend einen Assoziatiwerdicker nach einem der vorhergehenden Ansprüche in vollständig oder teilweise neutralisierter Form.

13. Verfahren zur Herstellung einer flüssigen Wasch- oder Reinigungsmittelzusammensetzung, bei dem man in eine Wasch- oder Reinigungsmittelvorformulierung einen Assoziativverdicker nach einem der Ansprüche 1 bis 11 nachträglich einarbeitet.

14. Verfahren zur Herstellung eines Assoziativverdickers, enthaltend eine wässrige Dispersion eines alkalilöslichen Copolymers, wobei man einen thermisch aktivierbaren radikalischen Polymerisationsinitiator vorlegt und ein Monomerengemisch zulaufen lässt, das umfasst
a) 10 bis 75 Gew.-% wenigstens eine ethylenisch ungesättigte Carbonsäure,
b) wenigstens ein nichtionisches ethylenisch ungesättigtes Tensidmonomer,
c) wenigstens ein C₁-C₂-Alkylmethacrylat,
d) wenigstens ein C₂-C₄-Alkylacrylat, wobei die über die Zahl der Alkylgruppen des Alkylacrylats gemittelte Alkylkettenlänge 2,1 bis 4,0 beträgt.

15. Verfahren zur Herstellung eines Assoziativverdickers, enthaltend eine wässrige Dispersion eines alkalilöslichen Copolymers, wobei man in eine wässrige Vorlage ein Monomerengemisch zulaufen lässt, das umfasst
a) 10 bis 75 Gew.-% wenigstens eine ethylenisch ungesättigte Carbonsäure,
b) wenigstens ein nichtionisches ethylenisch ungesättigtes Tensidmonomer,
c) wenigstens ein C₁-C₂-Akylmethacrylat,
d) wenigstens ein C₂-C₄-Alkylacrylat, wobei die über die Zahl der Alkylgruppen des Alkylacrylats gemittelte Alkylkettenlänge 2,1 bis 4,0 beträgt,
und während des Zulaufs des Monomerengemisches zumindest zeitweise eine Oxidationsmittelkomponente und eine Reduktionsmittelkomponente eines Redoxinitiatorsystems zulaufen lässt.

## Claims

1. An associative thickener comprising an aqueous dispersion of an alkali-soluble copolymer with copolymerized units
a) of 10 to 75% by weight of at least one ethylenically unsaturated carboxylic acid,
b) of at least one nonionic ethylenically unsaturated surfactant monomer,
c) of at least one C₁-C₂-alkyl methacrylate,
d) of at least one C₂-C₄-alkyl acrylate, where the alkyl chain length averaged over the number of alkyl groups of the alkyl acrylate is 2.1 to 4.0.

2. The associative thickener according to claim 1, in which the copolymer moreover comprises copolymerized units of an ethylenically polyunsaturated monomer.

3. The associative thickener according to claim 1 or 2, in which the nonionic ethylenically unsaturated surfactant monomer has the general formula
R-O-(CH₂-CHR'-O)ₙ-CO-CR"=CH₂
in which R is C₆-C₃₀-alkyl,
R' is hydrogen or methyl,
R" is hydrogen or methyl, and
n is an integer from 2 to 100.

4. The associative thickener according to any one of the preceding claims, in which the ethylenically unsaturated carboxylic acid is selected from acrylic acid, methacrylic acid, itaconic acid and maleic acid.

5. The associative thickener according to any one of the preceding claims, in which the copolymer comprises 5 to 85% by weight, based on the total weight of the copolymer, of copolymerized units of n-butyl acrylate.

6. The associative thickener according to any one of the preceding claims, in which the copolymer is a single-stage copolymer.

7. The associative thickener according to any one of the preceding claims, in which the aqueous dispersion furthermore comprises an anionic and/or a nonionic emulsifier.

8. The associative thickener according to claim 7, in which the emulsifier has the general formula
R-O-(CH₂-CHR'-O)ₙ-X
in which R is C₆-C₃₀-alkyl,
R' is hydrogen or methyl,
X is hydrogen or SO₃M,
M is hydrogen or an alkali metal, and
n is an integer from 2 to 100.

9. The associative thickener according to any one of the preceding claims, obtainable by polymerization of a monomer mixture in the presence of a thermally activatable free-radical polymerization initiator.

10. The associative thickener according to claim 9, where the thermally activatable free-radical polymerization initiator is initially introduced in its entirety and the monomer mixture is run in.

11. The associative thickener according to any one of claims 1 to 8, obtainable by polymerization of a monomer mixture in the presence of a redox initiator system.

12. A liquid detergent or cleaner composition comprising an associative thickener according to any one of the preceding claims in completely or partially neutralized form.

13. A method for the preparation of a liquid detergent or cleaner composition in which an associative thickener according to any one of claims 1 to 11 is subsequently incorporated into a detergent or cleaner preformulation.

14. A method for the preparation of an associative thickener comprising an aqueous dispersion of an alkali-soluble copolymer, where a thermally activatable free-radical polymerization initiator is initially introduced and a monomer mixture is run in which comprises
a) 10 to 75% by weight of at least one ethylenically unsaturated carboxylic acid,
b) at least one nonionic ethylenically unsaturated surfactant monomer,
c) at least one C₁-C₂-alkyl methacrylate,
d) at least one C₂-C₄-alkyl acrylate, where the alkyl chain length averaged over the number of alkyl groups of the alkyl acrylate is 2.1 to 4.0.

15. A method for the preparation of an associative thickener comprising an aqueous dispersion of an alkali-soluble copolymer, where a monomer mixture which comprises
a) 10 to 75% by weight of at least one ethylenically unsaturated carboxylic acid,
b) at least one nonionic ethylenically unsaturated surfactant monomer,
c) at least one C₁-C₂-alkyl methacrylate,
d) at least one C₂-C₄-alkyl acrylate, where the alkyl chain length averaged over the number of alkyl groups of the alkyl acrylate is 2.1 to 4.0,
is run in to an aqueous initial charge and during the addition of the monomer mixture, at least at times, an oxidizing agent component and a reducing agent component of a redox initiator system are run in.

## Revendications

1. Epaississant associatif, contenant une dispersion aqueuse d'un copolymère soluble dans les alcalis, présentant des unités copolymérisées
a) 10 à 75% en poids d'au moins un acide carboxylique éthyléniquement insaturé,
b) au moins un monomère tensioactif éthyléniquement insaturé non ionique,
c) au moins un méthacrylate de C₁-C₂-alkyle,
d) au moins un acrylate de C₂-C₄-alkyle, la longueur de chaîne alkyle en moyenne sur le nombre de groupes alkyle de l'acrylate d'alkyle valant 2,1 à 4,0.

2. Epaississant associatif selon la revendication 1, le copolymère contenant en outre des unités copolymérisées d'un monomère éthyléniquement polyinsaturé.

3. Epaississant associatif selon la revendication 1 ou 2, dans lequel le monomère tensioactif éthyléniquement insaturé non ionique présente la formule générale
R-O-(CH₂-CHR'-O)ₙ-CO-CR"=CH₂ où
R représente C₆-C₃₀-alkyle,
R' représente hydrogène ou méthyle,
R" représente hydrogène ou méthyle, et
n vaut un nombre entier de 2 à 100.

4. Epaississant associatif selon l'une quelconque des revendications précédentes, l'acide carboxylique éthyléniquement insaturé étant choisi parmi l'acide acrylique, l'acide méthacrylique, l'acide itaconique et l'acide maléique.

5. Epaississant associatif selon l'une quelconque des revendications précédentes, le copolymère contenant 5 à 85% en poids, par rapport au poids total du copolymère, d'unités copolymérisées d'acrylate de n-butyle.

6. Epaississant associatif selon l'une quelconque des revendications précédentes, le copolymère étant un copolymère en une étape.

7. Epaississant associatif selon l'une quelconque des revendications précédentes, la dispersion aqueuse contenant en outre un émulsifiant anionique et/ou un émulsifiant non ionique.

8. Epaississant associatif selon la revendication 7, l'émulsifiant présentant la formule générale
R-O-(CH₂-CHR'-O)ₙ-X
où
R représente C₆-C₃₀-alkyle,
R' représente hydrogène ou méthyle,
X représente hydrogène ou SO₃M,
M représente hydrogène ou un métal alcalin, et
n vaut un nombre entier de 2 à 100.

9. Epaississant associatif selon l'une quelconque des revendications précédentes, pouvant être obtenu par polymérisation d'un mélange de monomères en présence d'un initiateur de polymérisation radicalaire thermoactivable.

10. Epaississant associatif selon la revendication 9, l'initiateur de polymérisation radicalaire thermoactivable étant totalement disposé au préalable et le mélange de monomères étant alimenté.

11. Epaississant associatif selon l'une quelconque des revendications 1 à 8, pouvant être obtenu par polymérisation d'un mélange de monomères en présence d'un système initiateur redox.

12. Composition liquide d'agent de lavage ou de nettoyage, contenant un épaississant associatif selon l'une quelconque des revendications précédentes, sous forme complètement ou partiellement neutralisée.

13. Procédé pour la préparation d'une composition liquide d'agent de lavage ou de nettoyage, dans lequel on incorpore ultérieurement un épaississant associatif selon l'une quelconque des revendications 1 à 11 dans une préformulation d'agent de lavage ou de nettoyage.

14. Procédé pour la préparation d'un épaississant associatif, contenant une dispersion aqueuse d'un copolymère soluble dans les alcalis, un initiateur de polymérisation radicalaire thermoactivable étant disposé au préalable et un mélange de monomères étant alimenté, qui comprend
a) 10 à 75% en poids d'au moins un acide carboxylique éthyléniquement insaturé,
b) au moins un monomère tensioactif éthyléniquement insaturé non ionique,
c) au moins un méthacrylate de C₁-C₂-alkyle,
d) au moins un acrylate de C₂-C₄-alkyle, la longueur de chaîne alkyle en moyenne sur le nombre de groupes alkyle de l'acrylate d'alkyle valant 2,1 à 4,0.

15. Procédé pour la préparation d'un épaississant associatif, contenant une dispersion aqueuse d'un copolymère soluble dans les alcalis, un mélange de monomères étant alimenté dans une charge préalable aqueuse, qui comprend
a) 10 à 75% en poids d'au moins un acide carboxylique éthyléniquement insaturé,
b) au moins un monomère tensioactif éthyléniquement insaturé non ionique,
c) au moins un méthacrylate de C₁-C₂-alkyle,
d) au moins un acrylate de C₂-C₄-alkyle, la longueur de chaîne alkyle en moyenne sur le nombre de groupes alkyle de l'acrylate d'alkyle valant 2,1 à 4,0,
et en ajoutant pendant l'alimentation du mélange de monomères au moins par intermittence un composant de type oxydant et un composant de type réducteur d'un système initiateur redox.
